# EUROPEAN PATENT APPLICATION

(11) **EP 1 906 342 A2**
(43) Date of publication of application: **02.04.2008**
(21) Application number: 07018831.3
(22) Date of filing: 25.09.2007
(51) Int. Cl.: G06K 19/077

(54) **Label tape roll, label production cartridge, label producing apparatus, and RFID label**

(30) Priority: 27.09.2006 JP 2006263077
(71) Applicant: Brother Kogyo Kabushiki Kaisha, Nagoya-shi, Aichi-ken 467-8561 (JP)
(72) Inventor: Ito, Akira, Mizuho-ku Nagoya-shi Aichi 467-8561 (JP); Fukui, Tomoyasu, Mizuho-ku Nagoya-shi Aichi 467-8561 (JP); Takeda, Michihiro, Mizuho-ku Nagoya-shi Aichi 467-8561 (JP)
(74) Representative: Materne, Jürgen

(57) **Abstract**

A label producing apparatus (1) is provided that produces a label (T) using a label tape (109), and the label tape (109) includes a magnetic film layer (101b) having a magnetic film (GF) in a substantially sheet-state intermittent in a tape longitudinal direction and having a width-direction dimension smaller than the width-direction dimension of the label tape (109), an affixing adhesive layer (101c) provided on one side of the magnetic film layer (101b) in the tape thickness direction to affix the magnetic film layer (101b) to an affixing target, and a separation sheet (101d) covering one side of the adhesive layer (101c) in the tape thickness direction and to be separated at affixing.

## Description

### TECHNICAL FIELD

The present invention relates to a label tape roll comprised by winding a label tape, a label production cartridge provided with the label tape roll, label producing apparatus to which the label production cartridge is detachably attached, and an RFID label provided with an RFID circuit element capable of wireless communication of information with the outside.

### BACKGROUND ART

An RFID (Radio Frequency Identification) system for reading/writing information contactlessly between a small-sized RFID tag and a reader (reading device)/writer (writing device) has been already put into practice in various fields. For example, an RFID circuit element provided at a label-state or a card-state RFID tag is provided with an IC circuit part storing predetermined RFID tag information and an antenna connected to the IC circuit part for information transmission/reception and is capable of access (reading/writing information) to the RFID tag information of the IC circuit part from the reader/writer side.

For example, as a tag label producing apparatus for producing the above label-state RFID tag, an apparatus described in Patent Document 1 (JP,A,2005-186567) is known. In this prior art, a band-state tag tape on which RFID circuit elements are affixed with a predetermined interval is fed out of a tag tape roll, and a print-receiving tape on which print information corresponding to the above written RFID tag information is printed by printing means (thermal head) on the label surface are bonded thereto so as to form a tag tape with print, and when the tag tape with print is fed on a feeding path, the predetermined RFID tag information generated on the side of the apparatus is transmitted from a reader/writer antenna (RFID data writing/reading part) and sequentially written in the IC circuit part (IC chip) RFID circuit element and then, cut by a cutter to a desired length so that the RFID label is produced.

### DISCLOSURE OF THE INVENTION

### Problem to be solved by the Invention

Recently, use of an RFID tag has become diversified with growth of its use, and tag labels in various forms corresponding to the use are in demand. For example, a need to affix a tag label to an affixed surface made of metal (or an affixed surface with metal in the vicinity) such as a back spine of a binder has emerged. In this case, there is a possibility that the RFID circuit element gets close to the metal and causes a communication failure with the prior art RFID label.

It is an object of the present invention to provide a label tape roll, a label production cartridge, a label producing apparatus and an RFID label which can ensure smoothness and reliability of communication without incurring a communication failure even if the label is affixed to a metal affixed surface (or an affixed surface with metal present in the vicinity).

In order to achieve the above object, an invention is a label tape roll configured by winding a label tape in a substantially tape state provided with a predetermined width-direction dimension around a shaft substantially crossing a tape longitudinal direction, characterized in that the label tape includes: a magnetic layer in a substantially band-state continuous in the tape longitudinal direction or in a substantially sheet-state intermittent in the tape longitudinal direction and having a width-direction dimension smaller than the width-direction dimension of the label tape; an affixing adhesive layer provided on one side of the magnetic layer in the tape thickness direction to affix the magnetic layer to an affixing target; and a separation material layer that covers the one side of the affixing adhesive layer in the tape thickness direction and is separated at affixing.

In the label tape roll of the invention of the present application, when an RFID label is to be obtained by mounting an RFID circuit element provided with an IC circuit part and an antenna to a label produced using this label tape, a user can produce an RFID label by affixing an antenna base on which the RFID circuit element is arranged to the other side of the label tape in the tape thickness direction.

At this time, in the invention of the present application, the magnetic layer in a substantially band-state (or substantially sheet-state intermittent in the tape longitudinal direction) smaller than the tape width-direction dimension is provided in correspondence to the affixing work, by which the RFID circuit element can be mounted at a position corresponding to the magnetic layer when the RFID circuit element is mounted to the label. In this way, when the produced RFID label is to be affixed via the affixing adhesive layer by separating the separation material layer, even if the label is affixed to a metal affixed surface (or an affixed surface with metal in the vicinity), the magnetic layer can be interposed between the RFID circuit element and the metal surface. Therefore, since occurrence of a communication failure caused by a magnetic path between the metal surface and the RFID circuit element can be prevented, smoothness and reliability of the communication can be ensured.

### BRIEF DESCRIPTION OF THE DRAWING

Fig. 1 is a system block diagram illustrating a label producing system provided with a label producing apparatus of an embodiment of the present invention.
Fig. 2 is a perspective view illustrating the entire structure of the label producing apparatus shown in Fig. 1.
Fig. 3 is a perspective view illustrating a structure of an internal unit inside the label producing apparatus.
Fig. 4 is a plan view illustrating the internal unit shown in Fig. 3.
Fig. 5 is an enlarged plan view schematically illustrating a detailed structure of a cartridge.
Fig. 6 is a conceptual diagram seeing a base tape from an arrow D direction in Fig. 5.
Fig. 7 is a partially extracted perspective view illustrating a detailed structure of an essential part of a label discharge mechanism.
Fig. 8 is a perspective view illustrating an appearance of the internal unit when the label discharge mechanism is removed from the structure shown in Fig. 3.
Fig. 9 is a perspective view illustrating an appearance of a cutting mechanism in which a half cutter is removed from the internal unit.
Fig. 10 is a perspective view illustrating the appearance of the cutting mechanism in which the half cutter is removed from the internal unit.
Fig. 11 is a perspective view illustrating a detailed structure of a movable blade and a fixed blade together with the half cut unit.
Fig. 12 is a partially enlarged sectional view of the detailed structure of the movable blade and the fixed blade.
Fig. 13 is a front view illustrating an appearance of the movable blade.
Fig. 14 is a cross-sectional view by A-A section in Fig. 13.
Fig. 15 is a functional block diagram illustrating a control system of the label producing apparatus.
Figs. 16A and 16B are top view and bottom view illustrating an example of an appearance of a label T.
Figs. 17A and 17B are diagrams obtained by rotating the cross sectional diagram of the XVIIA-XVIIA' section and the XVIIB-XVIIB' section in Fig. 16A counterclockwise by 90 degrees.
Figs. 18A to 18K are explanatory views illustrating a position relation among the label tape, a mark sensor, the half cut unit, the cutting mechanism, and a print head.
Figs. 19A and 19B are top views illustrating an example of a label and an example of the entire configuration of an RFID label produced by affixing an antenna sheet on which an RFID circuit element is arranged on the label.
Fig. 20 is a flowchart illustrating a control procedure executed by a control circuit.
Fig. 21 is a flowchart illustrating a detailed procedure of Step S100.
Fig. 22 is a flowchart illustrating a detailed procedure of Step S110.
Fig. 23 is a flowchart illustrating a detailed procedure of Step S200.
Fig. 24 is a flowchart illustrating a detailed procedure of Step S500.
Fig. 25 is a conceptual diagram seeing a base tape of a variation in which a magnetic film is not disposed at the center part of the tape width from a center arrow D direction in Fig. 5.
Fig. 26 is a diagram illustrating a label T of the variation in which the magnetic film is not disposed at the center part of the tape width.
Fig. 27 is a conceptual diagram seeing a base tape of a variation using the substantially sheet-state magnetic film from the center arrow D direction in Fig. 5.
Fig. 28 is a diagram illustrating an example of the label T of the variation in which the substantially sheet-state magnetic film is used.
Fig. 29 is a plan view illustrating a detailed structure of a cartridge of a variation when tape bonding is not carried out.
Fig. 30 is a plan view illustrating a detailed structure of a cartridge of another variation when tape bonding is not carried out.
Fig. 31 is a diagram illustrating a layered configuration of a label in a variation in which a base layer for concealing is provided.

### BEST MODE FOR CARRYING OUT THE INVENTION

An embodiment of the present invention will be described below referring to the attached drawings.

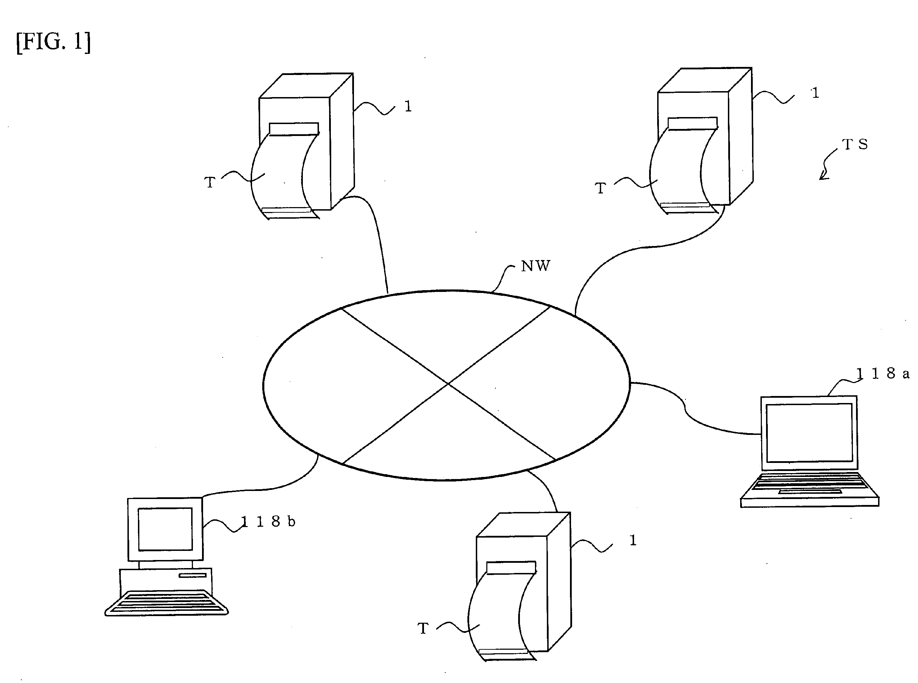

In a label producing system TS shown in Fig. 1, a label producing apparatus 1 of the present embodiment is connected to a terminal 118a and a general-purpose computer 118b through a wired or wireless communication line NW. The terminal 118a and the general-purpose computer 118b are collectively referred to simply as "PC118" below as appropriate.

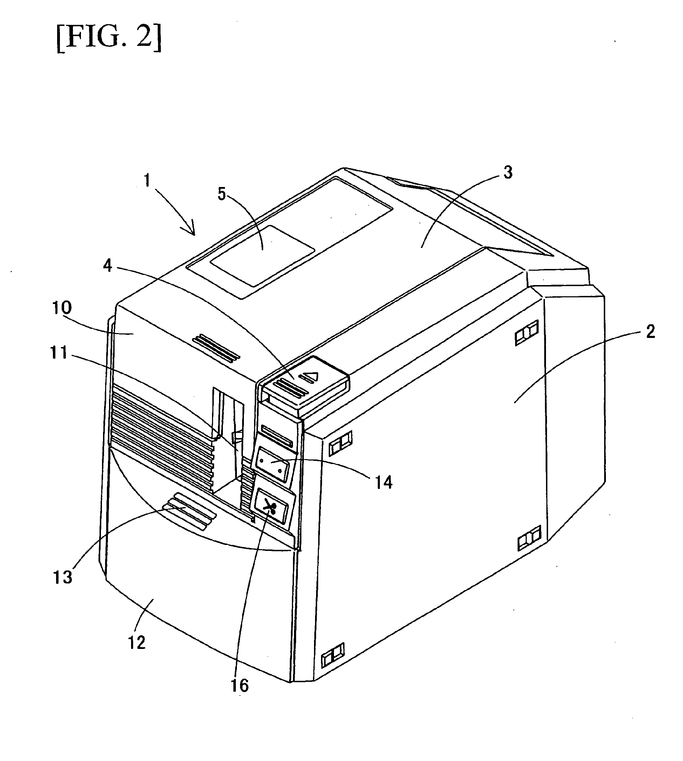

In Fig. 2, the label producing apparatus 1 is connected to the PC 118 and produces a desired label with print based on operation from the PC 118. The label producing apparatus 1 includes an apparatus main body 2 and an opening/closing lid 3 provided capable of being opened/closed on the top face of the apparatus main body 2. On the top face of the apparatus main body 2, an opening/closing button 4 for opening/closing the opening/closing lid 3 is arranged adjacently to the opening/closing lid 3.

The apparatus main body 2 includes a side wall 10 located at the apparatus front side (left front side in Fig. 2) and provided with a label carry-out exit 11 for discharging a label T (which will be described later) produced inside the apparatus main body 2 to the outside and a side lid 12 provided below the label carry-out exit 11 in the side wall 10 and having its lower end rotatably supported.

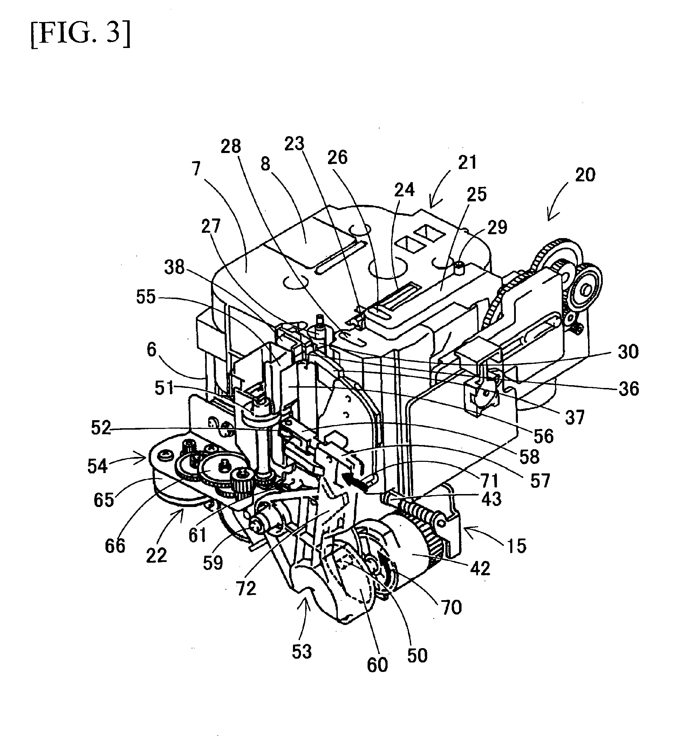

The side lid 12 is provided with a pusher portion 13, and the side lid 12 is opened frontward by pushing in this pusher portion 13 from above. Also, below the opening/closing button 4 in the front wall 10, a power button 14 for powering on/off of the label producing apparatus 1 is provided. Below this power button 14, a cutter driving button 16 is provided for driving a cutting mechanism 15 (See Fig. 3, which will be described later) disposed in the apparatus main body 2 through manual operation by a user, and a label tape 109 (details will be described later) is cut to a desired length so as to produce the label T by pushing this button 16.

The opening/closing lid 3 is pivotally supported rotatably at the end on the right depth side in Fig. 2 of the apparatus main body 2 and urged in the opening direction all the time through an urging member such as a spring. When the opening/closing button 4 arranged on the top face of the apparatus main body 2 is pushed, lock between the opening/closing lid 3 and the apparatus main body 2 is released and opened by action of the urging member. A see-through window 5 covered by a transparent cover is provided at the side center of the opening/closing lid 3.

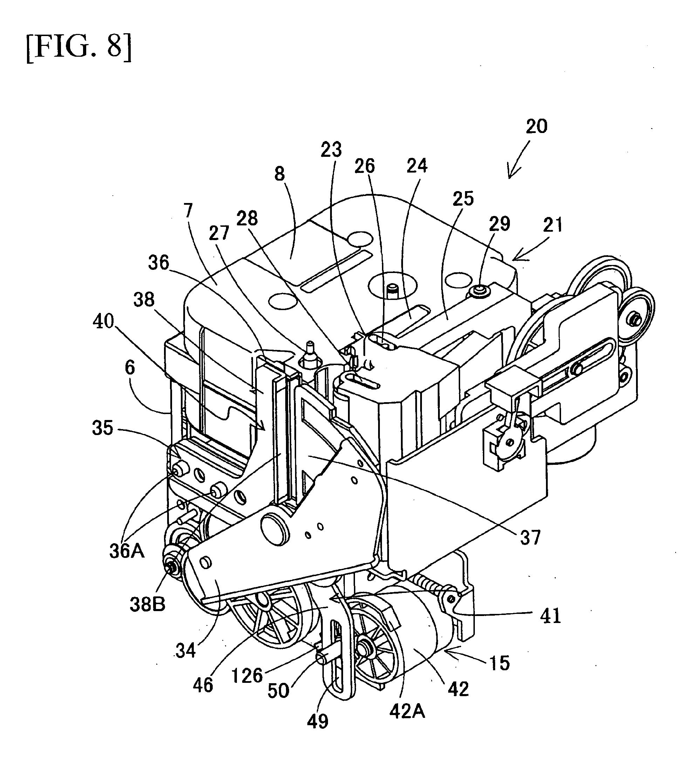

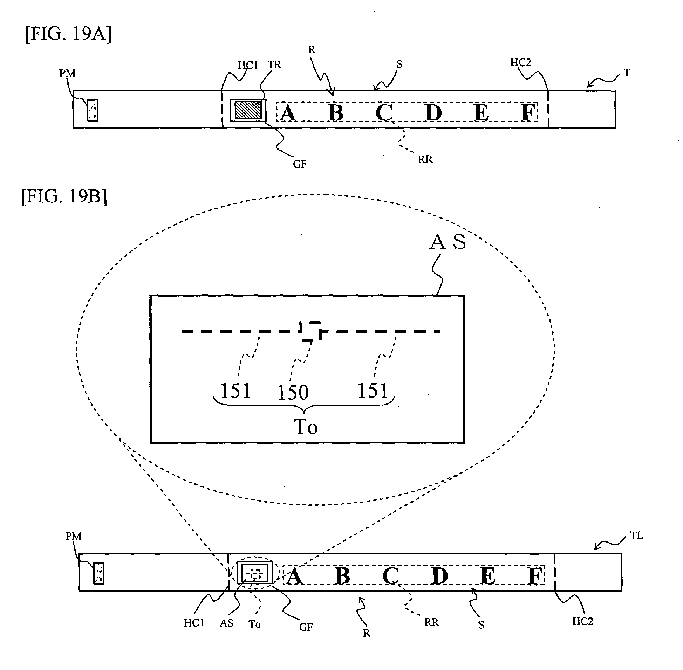

As seen in Fig. 3, an internal unit 20 is provided inside the label producing apparatus 1. In Fig. 3, the internal unit 20 includes a cartridge holder 6 for storing a cartridge 7, a printing mechanism 21 provided with a print head (thermal head) 2, the cutting mechanism 15, a half cut unit 35 (See Fig. 8, which will be described later), and a label discharge mechanism 22 for discharging the produced label T (See Fig. 19, which will be described later) from the label carry-out exit 11 (See Fig. 2).

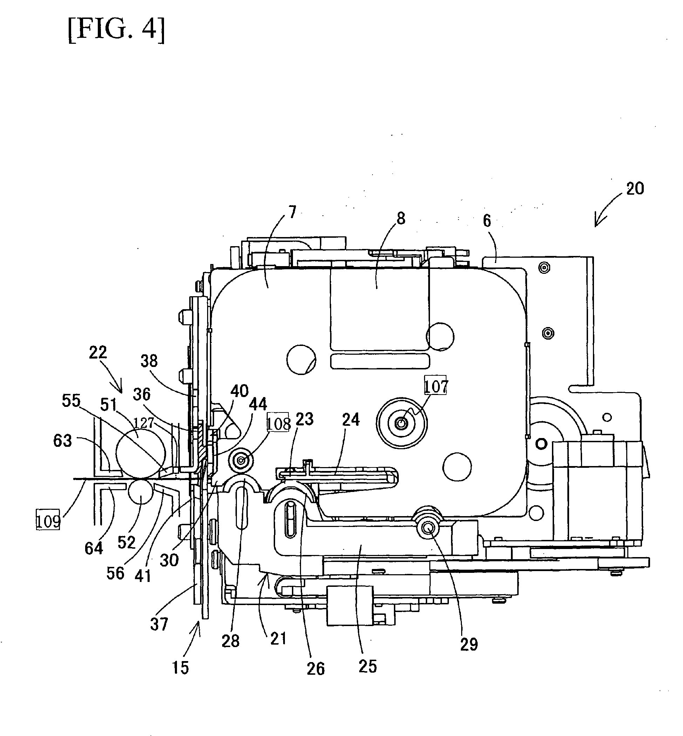

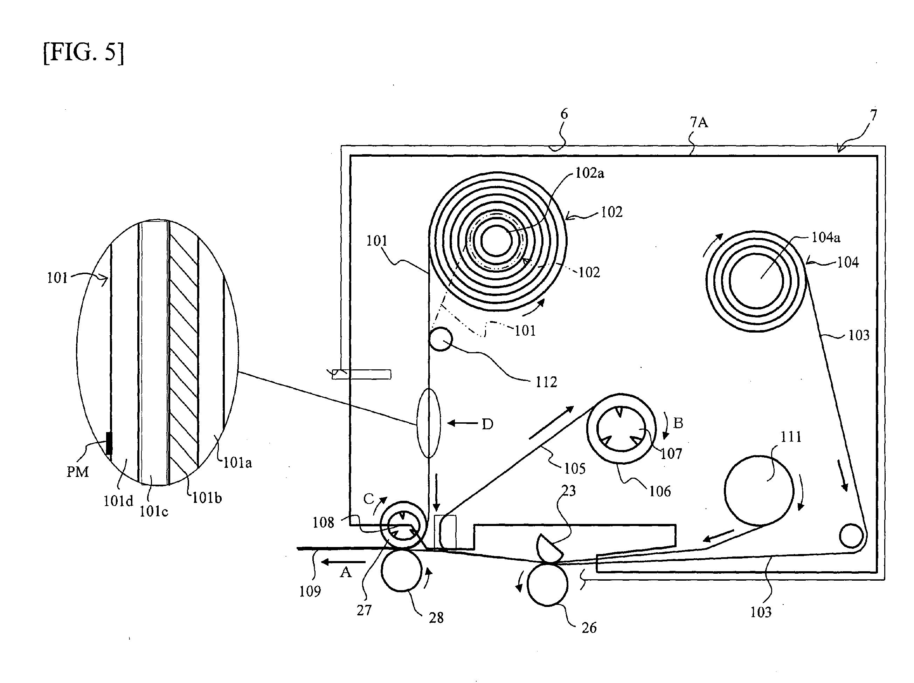

Fig. 4 is a plan view illustrating the structure of the internal unit 20 shown in Fig. 3 and Fig. 5 is an enlarged plan view schematically illustrating the detailed structure of the cartridge 7.

In Figs. 4 and 5, the cartridge holder 6 stores the cartridge 7 so that the direction of the label tape 109 in the width direction discharged from the label carry-out exit 11 is vertical. The cartridge 7 has a housing 7A, a first roll 102 arranged inside the housing 7A and around which the base tape 101 in the band-state is wound, a second roll 104 around which a transparent cover film 103 having substantially the same width as that of the base tape 101 is wound, a ribbon-supply-side roll 111 for feeding out an ink ribbon 105 (thermal transfer ribbon, however, it is not needed when the print-receiving tape is a thermal tape), a ribbon take-up roller 106 for taking up the ribbon 105 after printing, a feeding roller 27 rotatably supported in the vicinity of a tape discharge portion 30 of the cartridge 7, and a guide roller 112 functioning as feeding position regulating means.

The feeding roller 27 presses and bonds the base tape 101 and the cover film 103 together so as to have the label tape 109 with print and feeds the tape in a direction shown by an arrow A (also functioning as a pressure roller).

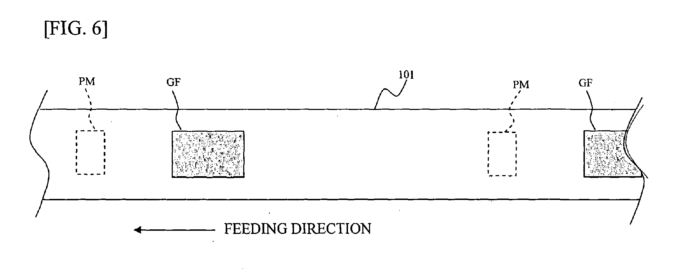

In the first roll 102, the base tape 101 in which substantially sheet-state magnetic films GF (See Fig. 6, which will be described later) intermittent in the longitudinal direction of the base tape 101 are sequentially formed with a predetermined equal interval is wound around a reel member 102a. The base tape 101 has a four-layered structure (See the partially enlarged view in Fig. 5) in this example and is configured in lamination in the order of an adhesive layer 101a made of an appropriate adhesive, a magnetic film layer 101b on which the substantially sheet-state magnetic films GF (See Fig. 6, which will be described later) intermittent in the tape longitudinal direction with a width-direction dimension smaller than the width-direction dimension of the label tape 109 are sequentially arranged with a predetermined interval, an adhesive layer 101c made of an appropriate adhesive, and a separation sheet 101d from the side wound inside (right side in Fig. 5) toward the opposite side (left side in Fig. 5).

On the front side of the magnetic film layer 101b (right side in Fig. 5), the adhesive layer 101a for bonding the cover film 103 later is formed, and on the back side of the magnetic film layer 101b (left side in Fig. 5), the separation sheet 101d is bonded to the magnetic film layer 101b by the adhesive layer 101c provided so as to include the magnetic film layer 101b.

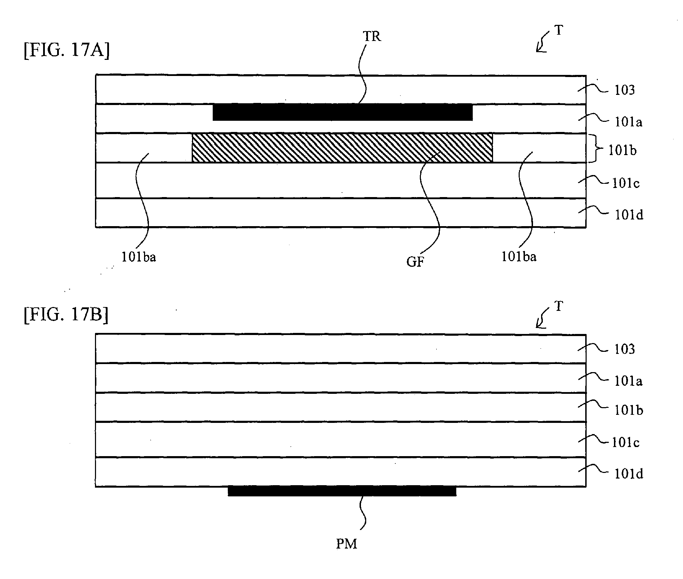

The separation sheet 101d enables adhesion to predetermined article or the like by the adhesive layer 101c through separation of the separation sheet when the label T finally completed in the label state is to be affixed to the predetermined article or the like. Also, on the surface of the separation sheet 101d, at a predetermined position (in this embodiment, a position on the front side in the feeding direction), a predetermined identifier for feeding control (an identifier painted in black in this embodiment. Alternatively, it may be a drilled hole penetrating the base tape 101 by laser machining or the like. See Figs. 6 and 17, which will be described later) PM is provided.

The second roll 104 has the cover film 103 wound around a reel member 104a. In the cover film 103 fed out of the second roll 104, the ribbon 105 arranged on its back face side (that is, the side to be affixed to the base tape 101) and driven by the ribbon-supply-side roll 111 and the ribbon take-up roller 106 is brought into contact with the back face of the cover film 103 by being pressed by the print head 23.

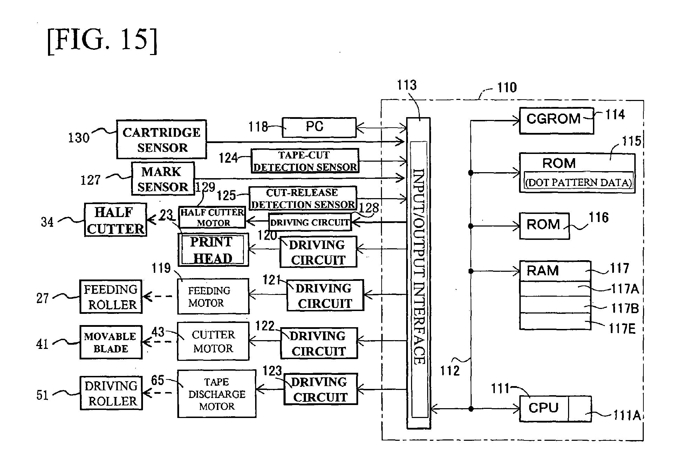

The ribbon take-up roller 106 and the feeding roller 27 are rotated/driven in conjunction by a driving force of a feeding motor 119 (See Fig. 15, which will be described later), which is a pulse motor, for example, provided outside the cartridge 7, transmitted to the ribbon take-up driving shaft 107 and the feeding roller driving shaft 108 through a gear mechanism, not shown.

At this time, the print head 23 provided with a large number of heater elements is mounted to a head mounting portion 24 installed upright at the cartridge holder 6 and arranged on the upstream side of the cover film 103 in the feeding direction than the feeding roller 27.

On the front of the cartridge 7 of the cartridge holder 6 (lower side in Fig. 4), a roller holder 25 is pivotally supported rotatably by a support shaft 29 so that switching can be made between a printing position (contact position, see Fig. 4) and a release position (separated position) by a switching mechanism. At this roller holder 25, a platen roller 26 and a tape pressure roller 28 are rotatably disposed, and when the roller holder 25 is switched to the printing position, the platen roller 26 and the tape pressure roller 28 are pressed against the print head 23 and the feeding roller 27.

In the above configuration, the base tape 101 fed out of the first roll 102 is supplied to the feeding roller 27. On the other hand, as for the cover film 103 fed out of the second roll 104, the ink ribbon 105 arranged on its back face side (that is, the side affixed to the base tape 101) and driven by the ribbon-supply-side roll 111 and the ribbon take-up roller 106 is pressed by the print head 23 and brought into contact with the back face of the cover film 103.

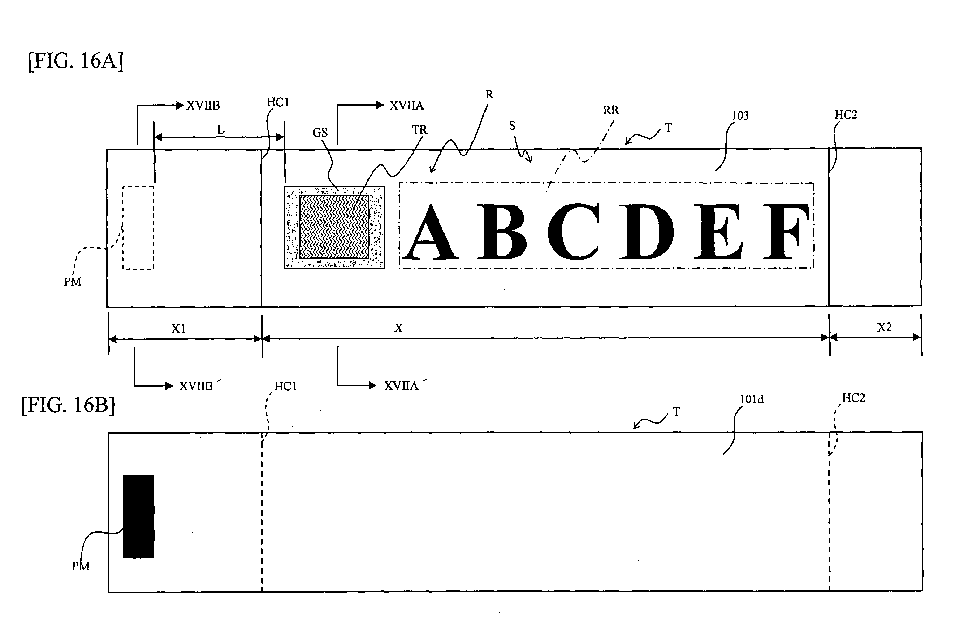

When the cartridge 7 is attached to the cartridge holder 6 and the roller holder 25 is moved from the release position to the printing position, the cover film 103 and the ink ribbon 105 are held between the print head 23 and the platen roller 26, and the base tape 101 and the cover film 103 are held between the feeding roller 27 and the pressure roller 28. Then, the ribbon take-up roller 106 and the feeding roller 27 are rotated and driven by the driving force of the feeding motor 119 in a direction shown by an arrow B and an arrow C, respectively, in synchronization with each other. At this time, the feeding roller driving shaft 108, the pressure roller 28 and the platen roller 26 are connected through the gear mechanism (not shown), and with the driving of the feeding roller driving shaft 108, the feeding roller 27, the pressure roller 28, and the platen roller 26 are rotated, and the base tape 101 is fed out of the first roll 102 and supplied to the feeding roller 27 as mentioned above. On the other hand, the cover film 103 is fed out of the second roll 104, and the plurality of heater elements of the print head 23 are electrified by a print-head driving circuit 120 (See Fig. 15, which will be described later). As a result, a label print R (See Fig. 16, which will be described later) corresponding to the base tape 101 to be the bonding target is printed on the back face of the cover film 103. Then, the base tape 101 and the cover film 103 on which the printing has been finished are bonded together by the feeding roller 27 and the pressure roller 28 to be integrated and formed as the label tape 109 with print and fed out of the cartridge 7 through the tape discharge portion 30. The ink ribbon 105 finished with printing on the cover film 103 is wound up by the ribbon take-up roller 106 by driving of the ribbon take-up driving shaft 107.

On the top face of the housing 7A of the cartridge 7, a tape identification indication portion 8 indicating the tape width, tape color or the like of the base tape 101 incorporated in the cartridge 7 is provided. When the cartridge 7 is attached to the cartridge holder 6 and the opening/closing lid 3 is closed, the above-mentioned see-through window 5 is opposed to the tape identification indication portion 8, and the tape identification indication portion 8 can be visually recognized through the transparent cover of the see-through window 5. With the above arrangement, the type and the like of the cartridge 7 attached to the cartridge holder 6 can be visually recognized easily from the outside of the apparatus main body 2 through the see-through window 5.

On the other hand, as mentioned above, the internal unit 20 is provided with the cutting mechanism 15 and the label discharge mechanism 22, and the label tape 109 is cut by the cutting mechanism 15 automatically or by operating the cutter driving button 16 (See Fig. 2) for the label tape 109 generated by being bonded as above so as to produce the label T. The label T is further discharged by the label discharge mechanism 22 after that from the label carry-out exit 11 formed at the side wall 10 (See Fig. 2).

The cutting mechanism 15 is provided with a fixed blade 40, a movable blade 41 for carrying out a cutting action together with the fixed blade 40, a cutter helical gear 42 connected to the movable blade 41, and a cutter motor 43 connected to the cutter helical gear 42 by a gear train.

The label discharge mechanism 22 is disposed in the vicinity of the label carry-out exit 11 provided at the side wall 10 of the apparatus main body 2 and has a function as discharge means for forcedly discharging the label tape 109 after being cut by the cutting mechanism 15 (in other words, the label T. The same applies to the following). That is, the label discharge mechanism 22 includes a driving roller 51, a pressure roller 52 opposed to the driving roller 51 with the label tape 109 between them, a pressure action mechanism portion 53 operated for pressing the pressure roller 52 against the label tape 109 or releasing the pressure, and a discharge driving mechanism portion 54 for rotation so that the label tape 109 is discharged by the driving roller 51.

At this time, first guide walls 55, 56 and second guide walls 63, 64 for guiding the label tape 109 to the label carry-out exit 11 are provided inside the label carry-out exit 11 (See Fig. 4). The first guide walls 55, 56 and the second guide walls 63, 64 are integrally formed, respectively, and arranged at the discharge position of the label tape 109 cut by the fixed blade 40 and the movable blade 41 so that they are separated from each other with a predetermined interval.

The pressure action mechanism portion 53 includes a roller support holder 57, a roller support portion 58 mounted at the roller support holder 57 and holding the pressure roller 52 at the tip end portion, a holder support portion 59 for rotatably supporting the roller support holder 57, a cam 60 for driving the pressure action mechanism portion 53 in conjunction with the cutting mechanism 15, and an urging spring 61.

The roller support portion 58 is rotatably supported as being held from the vertical direction. Then, when the roller support holder 57 is rotated counterclockwise around the holder support shaft 59 through the cam 60 (arrow 71 direction in Fig. 3) by rotation of the cutter helical gear 42, the pressure roller 52 is pressed toward the label tape 109. When the cutter helical gear 42 is rotated again, the holder support shaft 59 is rotated in the direction opposite to the previous time by the urging spring 61, and the pressure roller 52 is separated from the label tape 109.

The discharge driving mechanism portion 54 includes a tape discharge motor 65 and a gear train 66, and after the label tape 109 is pressed onto the driving roller 51 by the pressure roller 52, the label tape 109 is forcedly discharged in the discharge direction by driving the tape discharge motor 65 and rotating the driving roller 51 in the discharge direction of the label tape 109.

Fig. 6 is a conceptual diagram illustrating the base tape 101 fed out of the first roll 102 when seen from the arrow D direction in Fig. 5. In Fig. 6, on the surface of the separation sheet 101d (Fig. 6 shows a state seen from the side of the adhesive layer 101a on the opposite side), the above-mentioned identifiers PM are provided per predetermined interval, and on the magnetic film layer 101b, the magnetic films GF are arranged at positions with a predetermined distance from the identifier PM with an equal interval. The identifier PM indicates information relating to the position of the magnetic film GF, and by detecting the identifier PM by a mark sensor 127, which will be described later, the position of the magnetic film GF is detected, and print control is carried out for printing a tag affixing print TR to be a mark indicating a position to affix an antenna sheet AS having an RFID circuit element To according to.the position of the magnetic film GF (the detail will be described later).

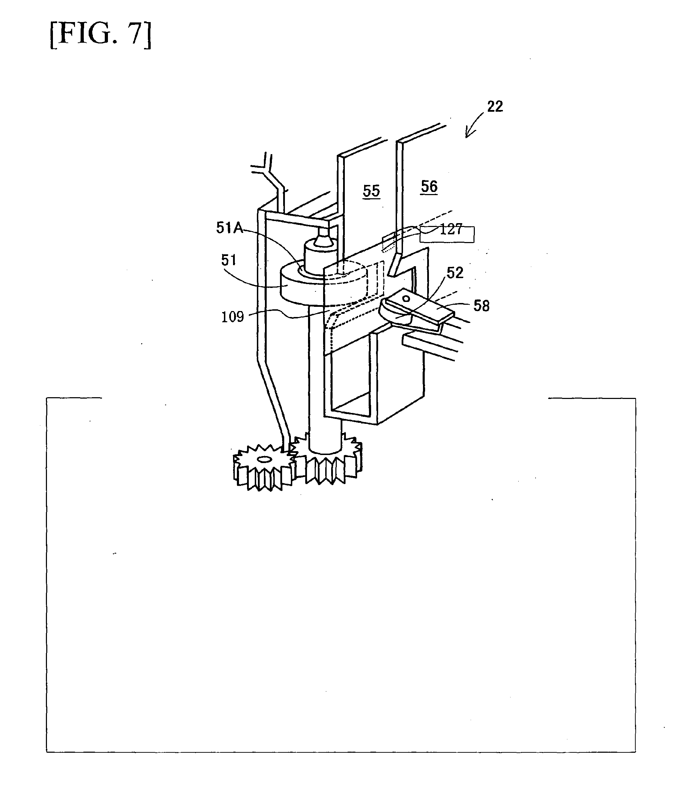

In Fig. 7, a detailed structure of an essential part of the label discharge mechanism 22 is indicated. In Fig. 7, middle portions in the vertical direction of the first guide walls 55, 56 are cut away, and the driving roller 51 is provided at the one first guide wall 55 so as to face the discharge position of the label tape 109 from the cut-away portion. The driving roller 51 has a roller cut-away portion 51A formed by a concentric groove on the top face. On the other hand, at the other first guide wall 56, the pressure roller 52 is supported by the roller support portion 58 of the pressure action mechanism portion 53 so as to face the discharge position of the label tape 109 from the cut-away portion.

Also, on the upstream side in the feeding direction than the driving roller 51, the mark sensor 127 is provided capable of detecting an appropriate identifier PM (See Fig. 6) provided at the separation sheet 101d of the base tape 101. The mark sensor 127 is a known reflective photoelectric sensor made of a light projector and a light receiver. According to presence of the identifier PM between the light projector and the light receiver, a control output from the light receiver is reversed. The first guide wall 56 opposed to the mark sensor 127 is configured with a color on the surface not reflecting the light of the light projector or with an inclination so that the light receiver does not receive a reflected light.

Fig. 8 indicates an appearance of the internal unit 20 when the label discharge mechanism 22 is removed.

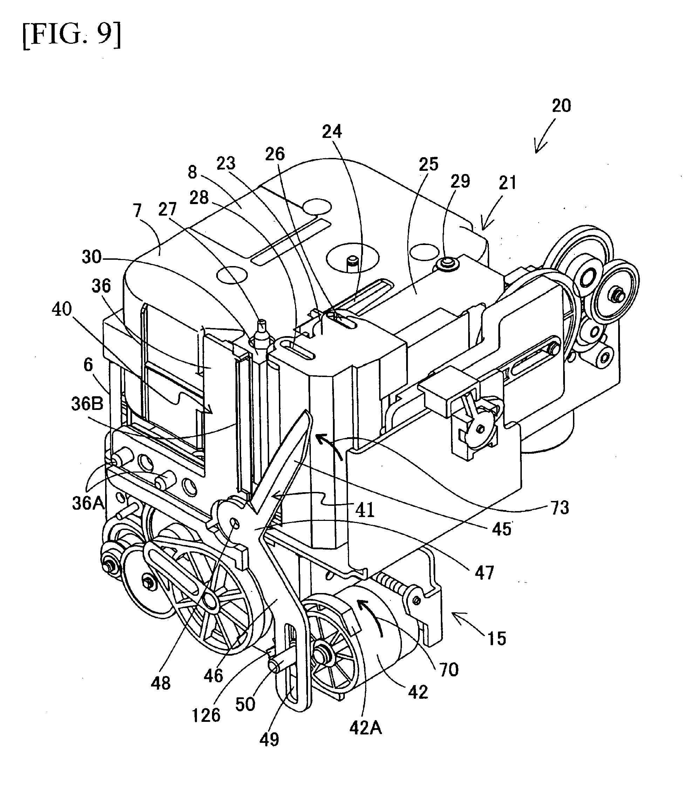

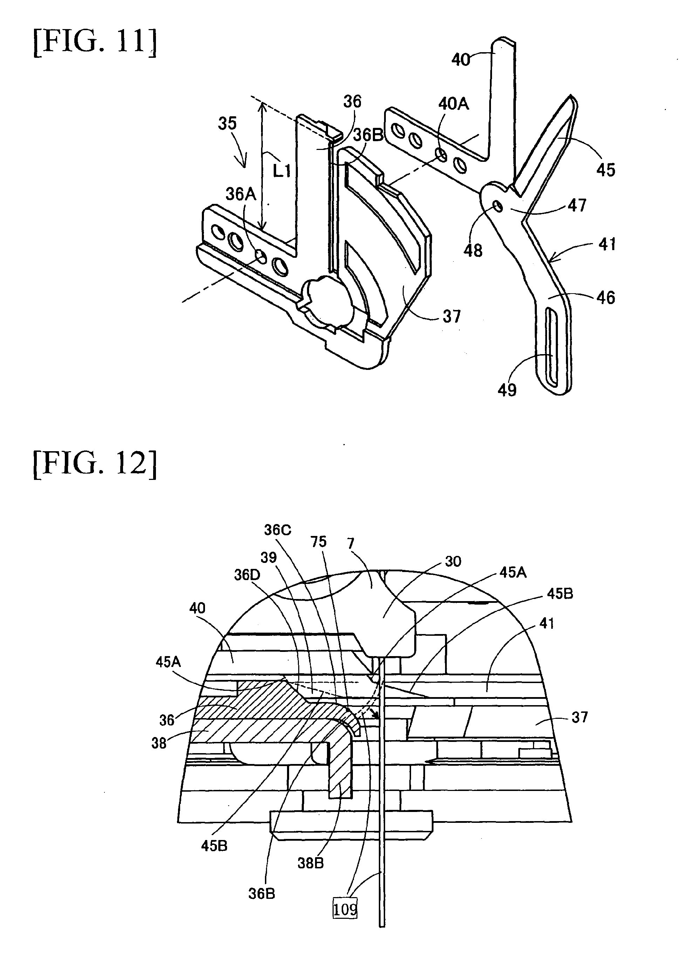

In Fig. 8, a boss 50 formed in the projecting state is provided at the cutter helical gear 42, and this boss 50 is configured to be inserted into a long hole 49 of the movable blade 41 (See also Figs. 11 and 9, which will be described later). Also, on the downstream side of the fixed blade 40 and the movable blade 41 along the tape discharge direction, a half cut unit 35 is mounted so as to be located between the fixed blade 40 as well as the movable blade 41 and the first guide walls 55, 56 (See Fig. 4).

The half cut unit 35 includes a cradle 38 arranged in accordance with the fixed blade 40, a half cutter 34 opposed to the cradle 38 and arranged on the side of the movable blade 41, a first guide portion 36 arranged in accordance with the fixed blade 40 between the fixed blade 40 and the cradle 38, and a second guide portion 37 opposed to the first guide portion 36 and arranged in accordance with the movable blade 41 (See also Fig. 11, which will be described later). The first guide portion 36 and the second guide portion 37 are integrally configured and mounted with the fixed blade 40 on a side plate 44 (See Fig. 4) by a guide fixing portion 36A provided at a position corresponding to a fixed hole 40A of the fixed blade 40.

At this time, in order to rotate the half cutter 34 around a predetermined rotating fulcrum (not shown), a half cutter motor 129 (not shown. See Fig. 15, which will be described later) is provided. The driving mechanism of the half cutter 34 using the half cutter motor 129 may be configured as follows, for example, though not shown in detail. That is, the half cutter motor 129 is configured by an electric motor capable of forward/reverse rotation, for example, connected to a crank member (not shown) provided with a pin (not shown) via a gear train (not shown), and a long groove is drilled in the half cutter 34 in advance for engagement with the pin of the crank member. Then, when the crank member is rotated by a driving force of the half cutter motor 129, the pin of the crank member is moved along the long groove, by which the half cutter 34 can be rotated in a predetermined direction (clockwise or counterclockwise).

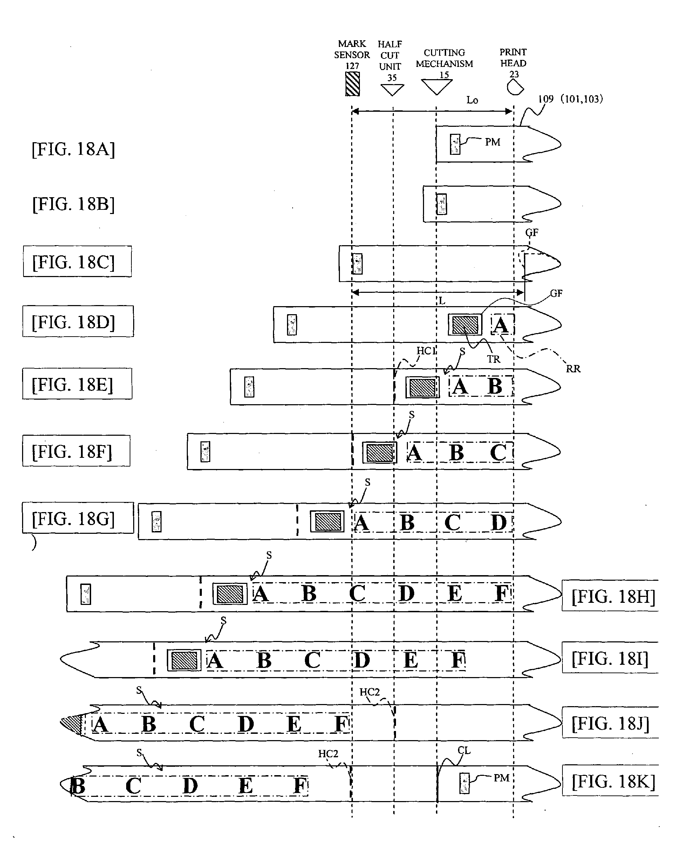

In the cradle 38, an end portion opposing the label tape 109 discharged from the tape discharge portion 30 is bent in parallel with the tape so as to form a receiving surface 38B. Here, the label tape 109 is in the five-layered structure by bonding the cover film 103 to the four-layered base tape 101 made of the adhesive layer 101a, the magnetic film layer 101b, the adhesive layer 101c, and the separation sheet 101d as mentioned above (See also Fig. 17, which will be described later). Then by pressing the half cutter 34 against the receiving surface 38B using the driving force of the half cutter motor 129 as mentioned above, the label tape 109 located between the half cutter 34 and the receiving surface 38B is cut in the cover film 103, the adhesive layer 101a, the magnetic film layer 101b, and the adhesive layer 101c, but only the separation sheet 101d is left uncut and a half cut line HC (See Fig. 18, which will be described later) is formed substantially along the tape width direction. After the half cutter 43 is brought into contact with the receiving surface 38B, the above-mentioned configuration is preferably realized by a slipping clutch, not shown, set between the gear trains so that an overload is not generated in the half cutter motor 129. The receiving surface 38B also has a role to guide the label tape 109 to the label carry-out exit 11 with the first guide portions 55, 56.

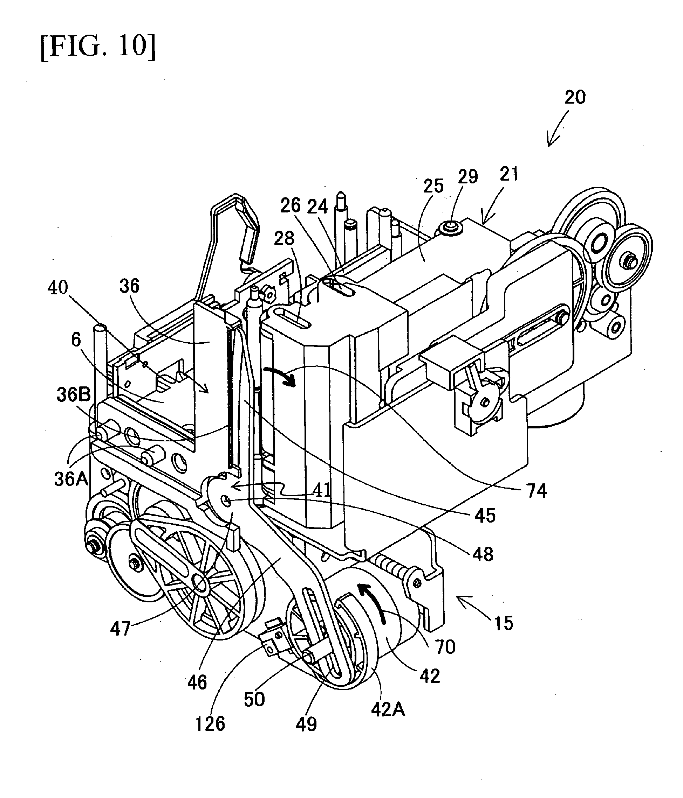

Figs. 9 and 10 indicate an appearance of the cutting mechanism 15, in which the half cutter 34 is removed from the internal unit 20.

In Figs. 9 and 10, at the cutting mechanism 15, when the cutter helical gear 42 is rotated by the cutter motor 43 (See Fig. 3), the movable blade 41 swings with a shaft hole 48 as the fulcrum by the boss 50 and the long hole 49, by which the label tape 109 is cut.

That is, first, when the boss 50 of the cutter helical gear 42 is located inside (left side in Fig. 9), the movable blade 41 is located away from the fixed blade 40 (hereinafter, this state is referred to as an initial state. See Fig. 9). Then when the cutter motor 43 is driven in this initial state and the cutter helical gear 42 is rotated counterclockwise (arrow 70 direction), the boss 50 is moved outward, and the movable blade 41 is rotated counterclockwise around the shaft hole 48 (arrow 73 direction) so as to cut off the label tape 109 with the fixed blade 40 fixed in the internal unit 20 (hereinafter, this state is referred to as a cut state. See Fig. 10).

After the label T is generated by cutting the label tape 109 in this way, it is necessary to return the movable blade 41 to the initial state in order to cut the label tape 109 to be fed next time. Therefore, by driving the cutter motor 43 again and rotating the cutter helical gear 42 counterclockwise (arrow 70 direction), the boss 50 is moved inward again and at the same time, the movable blade 41 is rotated clockwise (arrow 74 direction) so as to separate the movable blade 41 from the fixed blade 40 (See Fig. 9). Then the label tape 109 printed and fed from the cartridge 7 can be cut at the next time.

At this time, a cam 42A for cutter helical gear is provided on the cylindrical outer wall of the cutter helical gear 42, and when the cutter helical gear 42 is rotated by the cutter motor 43, a micro switch 126 provided adjacent to the cutter helical gear 42 is switched from an off state to an on state by action of the cam 42A for cutter helical gear, by which the cut state of the label tape 109 is detected.

Figs. 11 and 12 indicate a detailed structure of the movable blade 41 and the fixed blade 40. In Figs. 11 and 12, the fixed blade 40 is fixed to the side plate 44 (See Fig. 4) provided in the standing state on the left side of the cartridge holder 6 in the printing mechanism 15 by a screw or the like through the fixed hole 40A.

The movable blade 41 includes a blade portion 45 in the substantially V-shape and provided at the cutting portion, a shank portion 46 located opposite to the blade portion 45, and a bent portion 47. At the bent portion 47, the shaft hole 48 is provided, and the movable blade 41 is supported by the side plate 44 at the shaft hole 48 so that the blade can rotate with the bent portion 47 as a fulcrum. Also, the long hole 49 is formed at the shank portion 46 opposite to the blade portion 45 provided at the cutting portion of the movable blade 41. The blade portion 45 is formed by a two-stage blade, and its blade surface is configured by two inclined surfaces with different inclination angles of a first inclined surface 45A in which thickness of the blade portion 45 is gradually thinned and a second inclined surface 45B.

On the other hand, an end portion 36B opposite to the label tape 109 to be discharged in the first guide portion 36 of the above-mentioned half cut unit 35 is projected along the receiving surface 38B formed at the end portion of the cradle 38 and bent in the discharge direction of the label tape 109. Therefore, the end portion 36B of the first guide portion 36 has a smooth curved surface with respect to the discharge direction of the label tape 109 in a contact surface 36C with the label tape 109 to be discharged from the cartridge 7.

By projecting the end portion 36B of the first guide portion 36 and making the contact surface 36C in the curved surface, the tip end portion of the label tape 109 curled by more than a certain radius of curvature first hits the contact surface 36C of the first guide portion 36. At that time, when the tip end portion of the label tape 109 hits the downstream side of the label tape 109 in the discharge direction than a boundary point 75 on the contact surface 36C of the first guide portion (lower direction in Fig. 12), the tip end portion of the label tape 109 is moved to the downstream side along the curved surface and guided to the direction of the label carry-out exit 11 without intruding between the fixed blade 40 and the first guide portion 36 or the cradle 38.

Also, the first guide portion 36 is formed so that a guide width L1 (See Fig. 11) corresponding to the feeding path of the label tape 109 is larger than the maximum width (36 mm in this embodiment) of the label tape 109 to be attached, and an internal surface 36D is formed continuously to the contact surface 36C. The internal surface 36D is formed opposite to the first and the second inclined surfaces 45A, 45B of the movable blade 41 (the detail will be described later), and a part of the first and the second inclined surfaces 45A, 45B of the movable blade 41 is brought into contact at cutting (See Fig. 12). Since the movable blade 41 has its blade portion formed by the two-stage blade, when the label tape 109 is cut by the movable blade 41, a gap 39 is formed between the contact surface 36C as well as the internal surface 36D, which are the end portions of the first guide portion 36, and the second inclined surface 45B of the movable blade 41 (See Fig. 12).

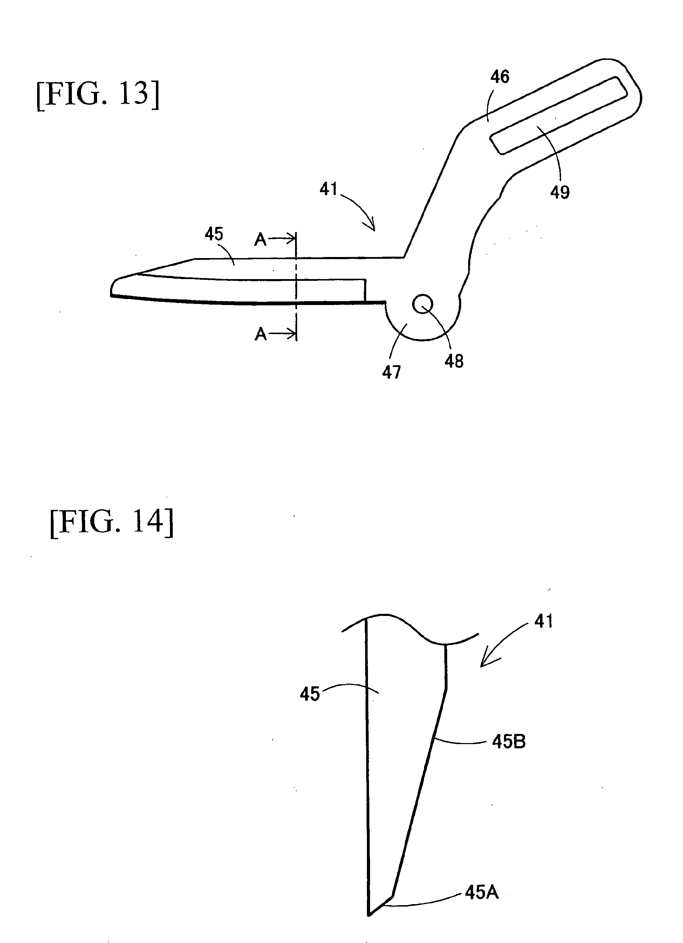

Figs. 13 and 14 indicate an appearance of the movable blade 41.

In Figs. 13 and 14, the first inclined surface 45A in the present embodiment forms an angle of 50 degrees with the back face opposite to the first inclined face 45A of the blade portion 45.

Fig. 15 indicates a control system of the label producing apparatus 1. In Fig. 15, on a control board (not shown) of the label producing apparatus 1, a control circuit 110 is arranged.

At the control circuit 110, a CPU 111 provided with a timer 111A inside for controlling each device, an input/output interface 113 connected to this CPU 111 through a data bus 112, a CGROM 114, ROM 115, 116, and a RAM 117 are provided.

At the CGROM 114, dot patterns for display are stored in correspondence with code data for each of a large number of characters.

In the ROM (dot pattern data memory) 115, the dot pattern data is classified by font (gothic fonts, Min dynasty fonts and the like) and each font is stored according to print character size and code data for each of the large number of characters for printing characters such as alphabetical characters and symbols. Also, graphic pattern data is stored for printing graphic images including gradation rendering.

In the ROM 116, a print driving control program for driving the print head 23, the feeding motor 119, and the tape discharge motor 65 by reading out data of a print buffer in correspondence with the code data of characters such as letters, numerals and the like input from the PC 118, a pulse-number determining program for determining the number of pulses corresponding to a forming energy amount of each print dot, a cutting driving control program for feeding the label tape 109 to the cut position by driving the feeding motor 119 when printing is finished and cutting the label tape 109 by driving the cutter motor 43, and a tape discharge program for forcedly discharging the label tape 109 which has been cut (= label T) by driving the tape discharge motor 65, and other various programs required for control of the label producing apparatus 1 are stored. The CPU 111 executes various calculations based on the various programs stored in the ROM 116.

In the RAM 117, a text memory 117A, a print buffer 117B, a parameter storage area 117E and the like are provided. In the text memory 117A, document data input from the PC 118 is stored. In the print buffer 117B, the dot patterns for print such as a plurality of characters and symbols and applied pulse number, which is a forming energy of each dot, are stored as the dot pattern data, and the print head 23 carries out dot printing according to the dot pattern data stored in this print buffer 117B. In the parameter storage area 117E, various calculation data is stored.

To the input/output interface 113, the PC 118, the print-head driving circuit 120 for driving the print head 23, a feeding motor driving circuit 121 for driving the feeding motor 119, a cutter motor driving circuit 122 for driving the cutter motor 43, a half cutter motor driving circuit 128 for driving the half cutter motor 129, a tape discharge motor driving circuit 123 for driving the tape discharge motor 65, a half cutter motor driving circuit 128 for driving the half cutter motor 129, a tape discharge motor derive circuit 123 for driving the tape discharge motor 65, a tape cut sensor 124, a cut release detection sensor 125, a mark sensor 127 which can detect the identifier PM, and a cartridge sensor 130 for obtaining cartridge type information (whether it is the cartridge including the magnetic film layer 101b) are connected, respectively.

In a control system centered on the control circuit 110, when character data or the like is input through the PC 118, the text (document data) is sequentially stored in the text memory 117A, the print head 23 is driven through the driving circuit 120, and each of the heater elements is selectively heated and driven in correspondence with print dots for one line for printing the dot pattern data stored in the print buffer 117B, in synchronization with which the feeding motor 119 carries out feeding control of the tape through the driving circuit 121. Also, a transmission circuit 306 carries out modulation control of a carrier wave based on a control signal from the control circuit 110, and a receiving circuit 307 performs processing of the demodulated signal based on the control signal from the control circuit 110.

Also, the tape cut sensor 124 and the cut release detection sensor 125 are comprised by the cam 42A for cutter helical gear 42 provided on the cylindrical outer wall of the cutter helical gear 42 and the micro switch 126 (See Figs. 9 and 10). Specifically, when the cutter helical gear 42 is rotated by the cutter motor 43, the micro switch 126 is switched from the off state to the on state by action of the cam 42A for cutter helical gear so as to detect that cutting of the label tape 109 by the movable blade 45 has been finished, by which the tape cut sensor 124 is configured. Also, if the cutter helical gear 42 is further rotated, the micro switch 126 is switched from the on state to the off state by action of the cam 42A for cutter helical gear so as to detect that the movable blade 45 has returned to the release position, by which the cut release detection sensor 125 is configured.

Figs. 16A, 16B, 17A, 17B indicate an example of an appearance of the label T formed by completing cutting of the label tape 109 with print by the label producing apparatus 1 configured as above.

In Figs. 16A, 16B, 17A, and 17B, the label T is in the five-layered structure in which the cover film 103 is added to the four-layered structure shown in Fig. 5 as mentioned above, and the five layers are comprised by the cover film 103, the adhesive layer 101a, the magnetic film layer 101b, the adhesive layer 101c, and the separation sheet 101d from the side of the cover film 103 (upper side in Fig. 17) to the opposite side (lower side in Fig. 17).

The magnetic film layer 101b is comprised by a base film 101ba made of the magnetic film GF and polyethylene terephthalate (PET) and the like for disposing the magnetic film GF in a predetermined form. The base film 101ba is comprised with a substantially equal thickness to the magnetic film GF and provided so as to compensate for a deficient part in the tape width-direction dimension or the longitudinal direction dimension in the magnetic film layer 101b (due to the fact that the width-direction dimension of the magnetic film GF is smaller than the width-direction dimension of the label tape 109 and in the substantially sheet-state intermittent in the tape longitudinal direction).

In the part corresponding to the magnetic film GF on the surface of the back face side (lower side in the figure) of the cover film 103, a tag affixing print TR (In this example, it is rectangular printing in order to visualize the affixing portion of the RFID circuit element To).

Since this embodiment is in the layered structure in which the cover film 103 and the adhesive layer 101a are provided on the upper side (surface side) of the magnetic film GF, the magnetic film GF is seen through the front side as shown in Fig. 16A.

Also, in the cover film 103, the adhesive layer 101a, the magnetic film layer 101b, and the adhesive layer 101c, a half-cut line HC (Two lines of a front half-cut line HC1 and a rear half-cut line HC2, which will be described later, in this embodiment) are formed by the half cutter 34 substantially along the tape width direction as mentioned above. In the cover film 103, a portion held between the half-cut lines HC1, HC2 becomes a print area S on which the label print R (including tag affixing print TR and normal print RR. The normal print RR is a print portion of "ABCDEF" in this example) is printed.

On the other hand, in Fig. 16A, the dimension of the print area S in the tape longitudinal direction (distance from the half-cut line HC1 to the half-cut line HC2) X is variably set according to the contents and form (the number of characters, font or the like) of the label print R. Also, a distance X1 from the tape tip end to the half-cut line HC1 and a distance X2 from the half-cut line HC2 to the tape rear end are set to predetermined values in advance (fixedly in this example). Also, the above-mentioned identifier PM remains on the separation sheet 101d, and a distance from the tip end of the identifier PM in the tape feeding direction to the tip end of the magnetic film GF in the tape feeding direction is a predetermined value L. Also, the distance from the tape rear end of the tag affixing print TR in the print area S to the tip end of the normal print RR is also set to a predetermined value in advance (fixedly in this example).

As having been already mentioned, instead of provision of marking painted in black as shown in Figs. 16B and 17B, a hole through which the base tape 101 penetrates can be drilled by laser machining or the like, though not shown. In this case, if the mark sensor 127 is comprised by a known reflective photoelectric sensor made of a light projector and a light receiver, when the identifier PM made of the above hole comes to a position between the light projector and the light receiver, the light from the light projector transmits the hole of the identifier PM and the transparent cover film 103 and stops reflection, and the light is no longer received by the light receiver, by which the control output from the light receiver is reversed and the identifier PM is detected.

In the label producing apparatus 1 in the above basic configuration, a behavior of control of the print head 23 according to the feeding position of the label tape 109 will be described using Figs. 18 and 19.

Each of Figs. 18A to 18K is an explanatory diagram illustrating a positional relation among the identifier PM of the label tape 109 continuously fed out, the print area S of the label print R (tag affixing print TR and the normal print RR), the mark sensor 127, the half cut unit 35, the cutting mechanism 15, and the print head 23. As shown, in the present embodiment, a distance L in the tape feeding direction between the identifier PM and the magnetic film GF is set in advance slightly larger than a distance Lo in the tape feeding direction between the mark sensor 127 and the print head 23 in the base tape 101.

First, Fig. 18A shows a state before the feeding-out of the label tape 109 from the cartridge 7 is started. In the shown state, the identifier PM is not detected by the mark sensor 127 yet.

After that, the feeding-out of the label tape 109 is started, feeding of the label tape 109 (in other words, feeding of the base tape 101 and the cover film 103. The same applies to the following) is started (Fig. 18B).

When feeding of the label tape 109 further progresses from this state, the vicinity of the tip end of the magnetic film GF in the tape feeding direction approaches the position of the print head 23 (Fig. 18C). Here, since the relation is L > Lo as mentioned above, when the tip end of the identifier PM in the tape feeding direction reaches the position of the mark sensor 127 by movement of the label tape 109, the tip end of the magnetic film GF of the cover film 103 in the tape feeding direction does not reach the position of the print head 23 but is located at a position slightly in front of that. If a slight blank area generated at this time (a blank till the tip end portion of the print area S in the tape feeding direction reaches the print head 23) is not particularly necessary, the setting may be L = Lo.

When the feeding of the label tape 109 slightly progresses from this state, the position corresponding to the magnetic film GF of the cover film 103 reaches the print head 23, and printing of the tag affixing print TR and the normal print RR on the print area S of the cover film 103 is started (Fig. 18D).

When the feeding of the label tape 109 further progresses from the state in Fig. 18D, the position of the front half-cut line HC1 set in advance (the position of the distance X1 from the tape tip end as mentioned above, See Fig. 16) reaches the position of the half cut unit 35 (Fig. 18E). Since the identifier PM has already been detected by the mark sensor 127 in this state as mentioned above, detection of arrival at this position is made by detecting progress of the label tape 109 from the state in the above-mentioned Fig. 18C (identifier PM detection started state) by a predetermined distance. In correspondence with this detection, the feeding of the label tape 109 is stopped, and the front half-cut line HC1 is formed by the half cut unit 35.

After that, the feeding of the label tape 109 is resumed, and the feeding of the label tape 109 further progresses from the state in Fig. 18E (Figs. 18F to 18G). Then, when the feeding of the label tape 109 further progresses, all the printing (tag affixing print TR and the normal print RR "ABCDEF") is finally completed (Fig. 18H).

When the feeding of the label tape 109 further progresses from the state in Fig. 18H, the position of the rear half-cut line HC2 set in advance (the position at the distance X2 from the tape rear end as mentioned above, See Fig. 16) reaches the position of the half cut unit 35 (Fig. 18J). The detection of arrival at this position is made by detecting the progress of the label tape 109 from the state in the above-mentioned Fig. 18C by a predetermined distance similarly to the above-mentioned position detection of the front half-cut line HC1. In correspondence with the detection, the feeding of the label tape 109 is stopped, and the rear half-cut line HC2 is formed by the half cut unit 35 (Fig. 18J).

After that, when the feeding of the label tape 109 further progresses, the position of a cutting line CL (cut portion) corresponding to the tape longitudinal dimension X of the print area S of each label T set variably corresponding to the length of the label print R reaches the position of the cutting mechanism 15. The detection of arrival at this position is also made by detecting the progress of the label tape 109 from the state in Fig. 18C by a predetermined distance similarly to the above. In correspondence with the detection, the feeding of the label tape 109 is stopped, cutting is carried out by the cutting mechanism 15 at the cutting line CL (Fig. 18K), and the tip end side of the label tape 109 is cut away to have the label T.

Fig. 19A is a view illustrating an example of the label T completed as above and substantially corresponds to the above-mentioned Fig. 16A. On the label T, the label print R (tag affixing print TR and the normal print RR) is applied on the print area S on the central side in the tale longitudinal direction.

Also, Fig. 19B is a top view illustrating an example of the entire configuration of the RFID label TL produced by affixing an antenna sheet on which the RFID circuit element To is arranged to the label T completed as above. As shown in Fig. 19B, by affixing the antenna sheet AS on which the RFID circuit element To provided with the IC circuit part 150 and the antenna 151 is arranged on the sheet-state base to the cover film 103 of the label T corresponding to the printed tag affixing print TR, the RFID label TL is produced.

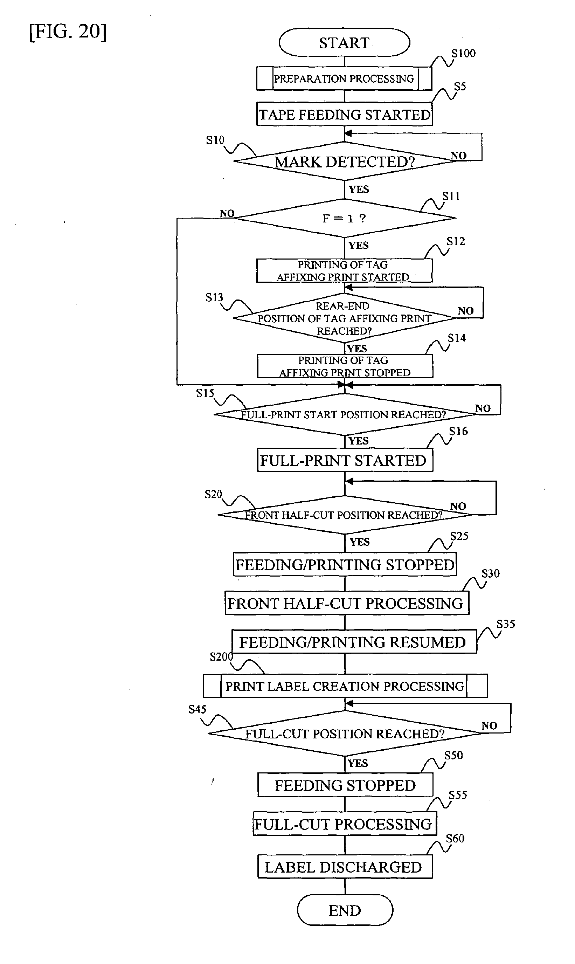

Fig. 20 indicates a control procedure executed by the control circuit 110 for carrying out the above control.

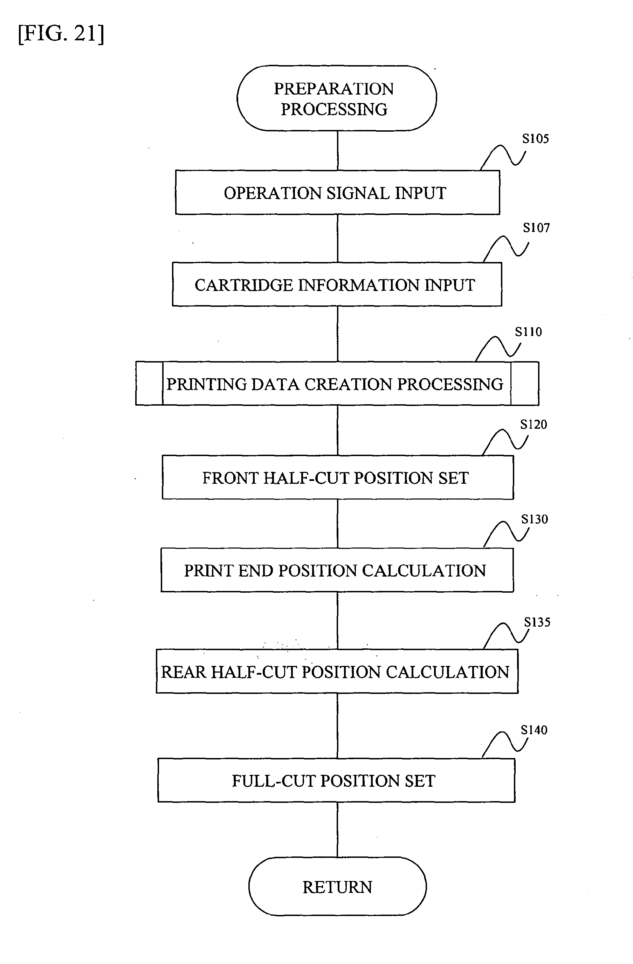

In Fig. 20, this flow is started when a predetermined label production operation is made by the label producing apparatus 1 through the PC 118. First, at Step S100, an operation signal from the PC 118 is input (through the communication line NW and the input/output interface 113), and preparation processing (for detail, see Fig. 21, which will be described later) is carried out for setting printing data and the like based on the operation signal.

After that, the routine goes to Step S5, a control signal is output to the feeding motor driving circuit 121 through the input/output interface 113, and the feeding roller 27 and the ribbon take-up roller 106 are rotated and driven by the driving force of the feeding motor 121. Moreover, a control signal is output to the tape discharge motor 65 through the tape discharge motor driving circuit 123, and the driving roller 51 is rotated and driven. In this manner, the base tape 101 is fed out of the first roll 102 and supplied to the feeding roller 27, while the cover film 103 is fed out of the second roll 104 and the base tape 101 and the cover film 103 are bonded by the feeding roller 27 and the pressure roller 28 to be integrated and formed as the label tape 109 with print, and further fed in the direction outside the label producing apparatus 1 from the direction outside the cartridge 7. When the feeding of the label tape 109 with print is started in this way, the routine goes to the subsequent Step S10.

At Step S10, based on a detection signal of the mark detection sensor 127 input through the input/output interface 113, it is determined if the identifier PM of the label tape 109 with print is detected or not. This procedure is repeated till the identifier PM is detected and the determination is satisfied, and when being detected, the determination is satisfied and the routine goes on to the subsequent Step S11.

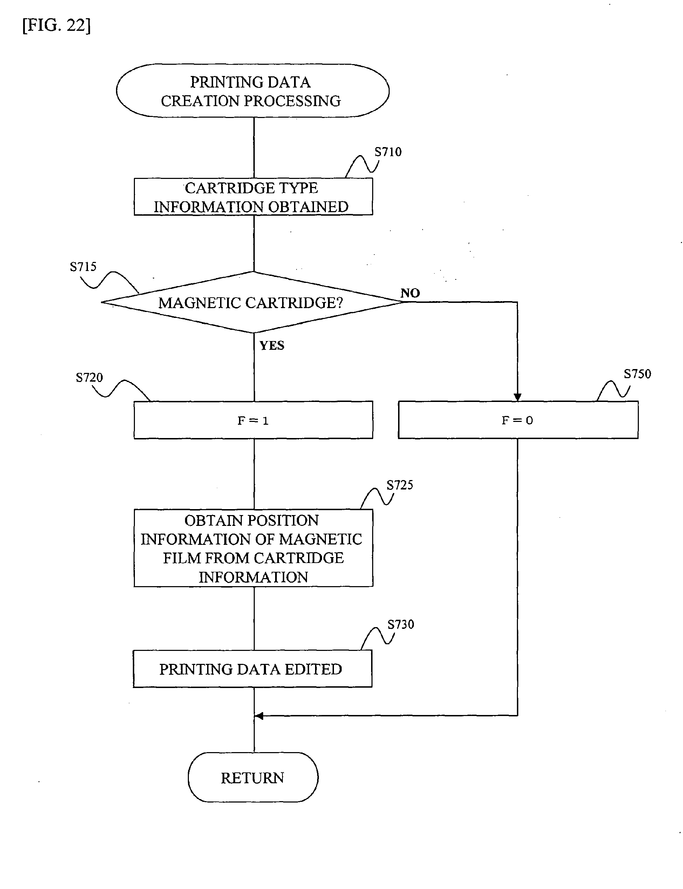

At Step S11, it is determined if a flag F indicating the type of the cartridge 7 (in the case of a cartridge having the magnetic film layer 101b including the magnetic film GF, F = 1 is set. In the case other than that, F = 0 is set. For details, see Fig. 22, which will be described later) is one or not. In the case of F = 1, the determination is satisfied, and the routine goes to the subsequent Step S12. In the case of F = 0, the determination is not satisfied and the routine goes to Step S15, which will be described later.

At Step S12, a control signal is output to the print-head driving circuit 120 through the input/output interface 113, the print head 23 is electrified, and the tag affixing print TR is started to a tip end portion of the above-mentioned print area S in the tape feeding direction in the cover film 103 (See Figs. 18C and 18D).

After that, at Step S13, it is determined if the label tape 109 has been fed to the rear end position of the tag affixing print TR (in other words, if the label tape 109 has been fed to a position where the print head 23 is opposed to the rear end of the tag affixing print TR or not). The determination at this time can be made by detecting a feeding distance after the identifier PM of the base tape 101 is detected at Step S10 by a predetermined known method (such as counting the number of pulses output by the feeding motor driving circuit 121 driving the feeding motor 119, which is a pulse motor). This procedure is repeated till the rear end position of the tag affixing print TR is reached and the determination is satisfied, and when being reached, the determination is satisfied and the routine goes to the subsequent Step S14.

At Step S14, a control signal is output to the print-head driving circuit 120 through the input/output interface 113, electricity to the print head 23 is stopped, and printing of the tag affixing print TR to the print area S is stopped.

After that, at Step S15, it is determined if the label tape 109 has been fed to the full-print start position where the normal print RR should be printed. The determination at this time can be also made by detecting a feeding distance after the identifier PM of the base tape 101 is detected at Step S10 by a predetermined known method (such as counting the number of pulses output by the feeding motor driving circuit 121 driving the feeding motor 119, which is a pulse motor). This procedure is repeated till the full-print start position is reached and the determination is satisfied, and when being reached, the determination is satisfied and the routine goes to the subsequent Step S16.

At Step S16, a control signal is output to the print-head driving circuit 120 through the input/output interface 113, and printing of the normal print RR (full-printing) such as characters, symbols, barcodes and the like corresponding to the printing data generated at Step S100 is started on the normal print RR portion (= area with an interval of a predetermined distance from the magnetic films GF arranged with an equal interval by a predetermined pitch on the base tape 101) in the above-mentioned tag print area S of the cover film 103 (Figs. 18D and 18E).

After that, at Step S20, it is determined if the label tape 109 with print has been fed to the above-mentioned front half-cut position (in other words, if the label tape 109 has reached the position where the half cutter 34 of the half cut mechanism 35 is opposed to the front half-cut line HC1). The determination at this time can be also made by detecting a feeding distance after the identifier PM of the base tape 101 is detected at Step S10 by a predetermined known method, for example, as mentioned above. This procedure is repeated till the front half-cut position is reached and the determination is satisfied, and when being reached, the determination is satisfied and the routine goes to the subsequent Step S25.

At Step S25, a control signal is output to the feeding motor driving circuit 121 and the tape discharge motor driving circuit 123 through the input/output interface 113, driving of the feeding motor 119 and the tape discharge motor 65 is stopped, and rotation of the feeding roller 27, the ribbon take-up roller 106 and the driving roller 51 is stopped. By this operation, during the course in which the label tape 109 with print fed out of the cartridge 7 is moved in the discharge direction, in the state where the half cutter 34 of the half cut mechanism 35 is opposed to the front half-cut line HC1 set at Step S100, feeding-out of the base tape 101 from the first roll 102, feeding-out of the cover film 103 from the second roll 104, and feeding of the label tape 109 are stopped. Also, at this time, a control signal is output to the print-head driving circuit 120 through the input/output interface 113, electricity to the print head 23 is stopped, and printing of the normal print RR (full-printing) is stopped (printing interrupted).

After that, at Step S30, the front half-cut processing is carried out that a control signal is output to the half cutter motor driving circuit 128 through the input/output interface 113 so as to drive the half cutter motor 129 and rotate the half cutter 34, and the cover film 103, the adhesive layer 101a, the magnetic film layer 101b and the adhesive layer 101c of the label tape 109 with print are cut so as to form the front half-cut line HC1 (See Fig. 18E).

Then, the routine goes on to Step S35, where the feeding roller 27, the ribbon take-up roller 106, and the driving roller 51 are rotated and driven similarly to Step S5 so as to resume feeding of the printed label tape 109 with print, and the print head 23 is electrified as in Step S15 so as to resume printing of the normal print RR.

After that, the routine goes to Step S200, where print label production processing is executed (the details will be described later).

After that, the routine goes to Step S45, where it is determined if the label tape 109 with print has been fed to the above-mentioned full-cut position or not (in other words, if the label tape 109 with print has reached the position where the movable blade 41 of the cutting mechanism 15 is opposed to the cutting line CL set at Step S100). The determination at this time can be also made by detecting a feeding distance after the identifier PM of the base tape 101 is detected at Step S10 by a predetermined known method, for example, as in the above. This procedure is repeated till the full-cut position is reached and the determination is satisfied, and when being reached, the determination is satisfied and the routine goes on to the subsequent Step S50.

At Step 50, similarly to Step S25, the rotation of the feeding roller 27, the ribbon take-up roller 106, and the driving roller 51 is stopped, and the feeding of the label tape 109 with print is stopped. By this operation, in the state where the movable blade 41 of the cutting mechanism 15 is opposed to the cutting line CL set at Step S100, feeding-out of the base tape 101 from the first roll 102, feeding-out of the cover film 103 from the second roll 104, and feeding of the label tape 109 are stopped.

After that, at Step S55, the full-cut processing is carried out that a control signal is output to the cutter motor driving circuit 122 so as to drive the cutter motor 43, the movable blade 41 of the cutting mechanism 15 is rotated, and the cover film 103, the adhesive layer 101a, the magnetic film layer 101b, the adhesive layer 101c, and the separation sheet 101d of the label tape 109 with print are all cut away (separated) so as to form the cutting line CL (See Fig. 18K). The label T is cut away from the label tape 109 by the separation by the cutting mechanism 15 so that the label T with a predetermined print in the label state is produced.

After that, the routine goes to Step S60, where a control signal is output to the tape discharge motor driving circuit 123 through the input/output interface 31 so as to resume the driving of the tape discharge motor 65, and the driving roller 51 is rotated. By this operation, the feeding by the driving roller 51 is resumed, the label T produced in the label state at Step S55 is fed toward the label carry-out exit 11 and discharged out of the label carry-out exit 11 to outside the label producing apparatus 1, and this flow is finished.

The cutting processing at Step S55 and the label discharge processing at Step S60 above may be carried out in conjunction as described below.

First, at the cutting operation by the cutting mechanism 15, for example, the cutter motor 43 is driven through the input/output interface 113 and the cutter motor derive circuit 122, the cutter helical gear 42 is rotated counterclockwise (arrow 70 direction in Fig. 3), and the roller support holder 57 is rotated around the holder support portion 59 (arrow 71 direction in Fig. 3) by the boss 50 and the cam 60. Then the label tape 109 is pressed to the driving roller 51 by the pressure roller 52 immediately before the label tape 109 is started to be cut by the fixed blade 40 and the movable blade 41 and the label tape 109 is held till the tape is cut.

After that, whether or not the cutting of the label tape 109 is completed is determined by the control circuit 110 based on a detection signal of the tape-cut detection sensor 124. When a detection signal of the micro switch 126 is switched from the off state to the on state, and if it is determined that the cutting has been completed, rotation of the cutter motor 43 is temporarily stopped through the input/output interface 113 and the cutter motor driving circuit 122. On the other hand, if the cutting has not been completed, driving of the cutter motor 43 is continued till the micro switch 126 is switched from the off state to the on state.

When the cutting is completed and the cutter motor 43 is stopped, the tape discharge motor 65 is rotated through the input/output interface 113 and the tape discharge motor driving circuit 123, the driving roller 51 is rotated through a gear train 66, and the held tape (label T) is discharged. Then according to whether or not a predetermined period of time (0.5 to 1.0 sec, for example) has elapsed since the tape discharge is started, determination on whether or not the label T has been discharged is made at the control circuit 110, and if determined as it has been discharged, the rotation of the tape discharge motor 65 is stopped through the input/output interface 113 and the tape discharge motor driving circuit 123, while if not, the rotation is continued till it is discharged.

After the rotation of the tape discharge motor 65 is stopped, the cutter motor 43 is rotated again through the input/output interface 113 and the cutter motor driving circuit 122. By that operation, the cutter helical gear 42 is rotated again, the moveable blade 41 is rotated and returned to the release position (See Fig. 12), while the roller support holder 57 is rotated by the urging spring 61 in a separating direction of the pressure roller 52 (opposite to the arrow 71 direction in Fig. 3) and held by a stopper 72 with a given interval. After that, detection is made at the control circuit 110 on whether or not the cut-release operation has been completed by a detection signal from the cut-release detection sensor 125. If the micro switch 126 has not been switched from the on state to the off state and the cut-release operation is not completed, the rotation of the cutter motor 43 is continued till completed. And if the micro switch 126 is switched from the on state to the off state and the cut-release operation is completed, the rotation of the cutter motor 43 is stopped, and the full-cut processing and the label discharge processing are finished.

As to the above-mentioned Step S100, in the flow shown in Fig. 21, first, at Step S105, an operation signal input and operated from the PC 118 is input (identified) through the input/output interface 113. This operation signal includes printing information such as characters, designs, drawing patterns and the like and their font (font, size, thickness and the like) of a label print R or code data of characters such as letters, numerals and the like designated by an operator, for example. As the operation signal of the label print R, it is preferably a selection signal obtained by making selection from among a plurality of types of patterns determined in advance since the input operation of the operator is facilitated.

At the subsequent Step S107, the cartridge information detected by the above-mentioned cartridge sensor 130 is input. The cartridge information includes the type of the cartridge 7 (if it is a cartridge including the above magnetic film layer 101b or not) or print area information of the tag affixing print TR, which will be described later.

After that, the routine goes to Step S110, where the printing data creation processing for creating corresponding printing data based on the operation signal input at the above Step S105 is executed (the details will be described later).

After that, the routine goes to Step S120, where the position of the above-mentioned front half-cut line HC1 is set. This setting is made at a position on the front half-cut line HC1 corresponding to the above cartridge information based on the operation signal input at the above Step S105. That is, a distance between the cutting line CL and the cutting line CL in the base tape 101, the length of a single label T is uniquely determined by the type of the cartridge 7, as mentioned above, and the position of the front half-cut line HC1 is (unlike the rear half-cut line HC2) is determined in advance by the length of the label T at a given position from the tip end of the label tape 109 regardless of the contents of the label print R (and stored in an appropriate location of the control circuit 110 in a table form, for example). In this procedure, based on the above presumption, the position of the front half-cut line HC1 is (fixedly) set at a position determined in advance for each cartridge 7.

Then the routine goes to Step S130, where based on the printing data created at Step S110, a position on the tape where printing of the normal print RR (full printing) is finished is calculated. That is, when the position is varied depending on the contents of the normal print RR and the print length becomes longer, the printing end position is (relatively) closer to the label rear end side, while the printing end position is (relatively) closer to the label front end side when the print length is short.

Then at Step S135, the position of the above-mentioned rear half-cut line HC2 is set. This setting is made at a position on the tape of the rear half-cut line HC2 corresponding to the cartridge information based on the operation signal input at Step S105 and the printing end position calculated at Step S130. That is, based on the operation signal input at Step S105, on the presumption that the distance from the printing end position to the rear half-cut line HC2 is determined to be constant in advance depending on the type of the cartridge 7, the position of the rear half-cut line HC2 on the tape is calculated in the form that the determined distance is subtracted (set between) with respect to the printing end position calculated at Step S130.

After that, the routine goes to Step S140, where the position of the cutting line CL of the label tape 109 (full-cut position) is set. This setting is also made based on the operation signal input at Step S105 as in Step S120, on the presumption that the label size is determined to be constant in advance depending on the type of the cartridge 7, the cutting position of the label tape 109 is (fixedly) set at a position determined in advance for each cartridge 7, and this routine is finished.

As to the above-mentioned Step S110, in the flow shown in Fig. 22, first at Step S710, based on the cartridge information input from the cartridge sensor 130 at Step S107, information relating to the type of the cartridge 7 attached to the cartridge holder 6 (if it is a cartridge including the above magnetic film layer 101b or not) is obtained. The cartridge sensor 130 detects a detected portion (identifier in the irregular shape or the like) separately provided at the cartridge 7 by appropriate cartridge detecting means (for mechanical detection such as a mechanical switch, a sensor for optical detection, a sensor for magnetic detection or the like) and outputs this detection signal to the control circuit 110, though not particularly shown.

At the above-mentioned Step S105, among the operation signals input and operated from the PC 118 through the input/output interface 113, the information relating to the type of the cartridge 7 attached to the cartridge holder 6 (if it is a cartridge including the above magnetic film layer 101b or not) is obtained.

After that, at Step S715, based on the cartridge type information obtained at the above Step S710, it is determined if the cartridge includes the magnetic film layer 101b (magnetic cartridge. The same applies to the following). If the magnetic cartridge is attached to the cartridge holder 6, the determination is satisfied, and the routine goes to Step S720.

At step S720, the above-mentioned flag F = 1 indicating that the cartridge 7 is the magnetic cartridge is set, and the routine goes to Step S725.

At Step S725, based on the cartridge information input from the cartridge sensor 130 at the above Step S107, position information of the magnetic film GF is obtained. Based on this information, the print area of the tag affixing print TR is determined. At this time, the print area of the tag affixing print TR is set so that the area is slightly smaller than the magnetic film GF portion both in the width-direction dimension and the longitudinal direction dimension with the tag affixing print TR being the largest area when the width-direction dimension and the longitudinal direction dimension are both the same as the above arbitrary magnetic film GF portion.

After that, at Step S730, editing of the printing data (layout of the normal print RR data) on the remaining print area S is carried out, and this flow is finished.

In the above-mentioned Step S715, when the cartridge 7 attached to the cartridge holder 6 is not the magnetic cartridge, the determination is not satisfied, and the routine goes to the subsequent Step S750.

At Step S750, the flag F = 0 indicating that the above-mentioned cartridge 7 is the magnetic cartridge is set, and this flow is finished.

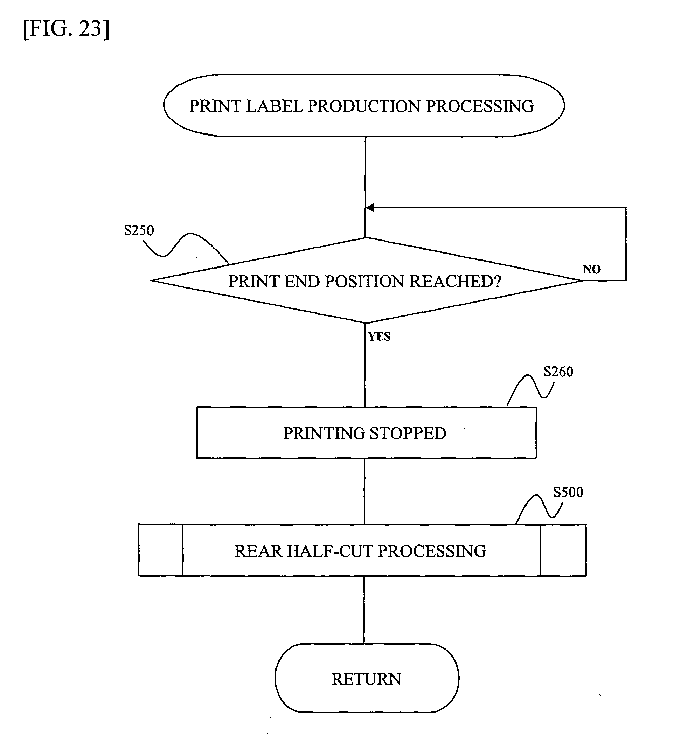

As to the above-mentioned Step S200, in the flow shown in Fig. 23, first, at Step S250, it is determined whether the label tape 109 with print has been fed to the printing end position (calculated at Step S130 in Fig. 21) at Step S250. This determination can be also made by detecting a feeding distance after the identifier PM of the base tape 101 is detected at Step S10 by a predetermined known method, for example, as in the above. This procedure is repeated till the printing end position is reached and the determination is satisfied, and when being reached, the determination is satisfied and the routine goes on to the subsequent Step S260.

At step S260, similarly to Step S25 in Fig. 20, electricity to the print head 23 is stopped, and printing of the normal print RR (full printing) is stopped. By this operation, printing of the label print R on the print area S is completed (See Fig. 18H).

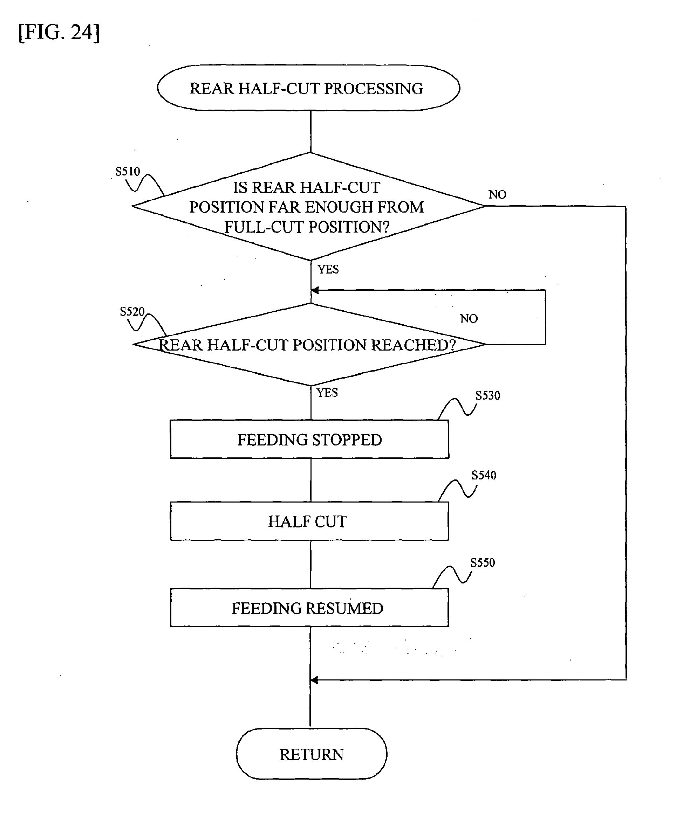

After that, the routine goes to Step S500, where the rear half-cut processing is carried out that the rear half-cut line HC2 is formed by the half cutter 34 of the half cut unit 35 after feeding is completed to the predetermined rear half-cut position (for details, see Fig. 24, which will be described later).

When the above Step S500 is completed, this routine is finished.

As to the above-mentioned Step S500, in the flow shown in Fig. 24, first, at Step S510, it is determined if a distance between the position of the rear half-cut line HC2 set at the above-mentioned Step S135 and the position of the cutting line CL set at the above-mentioned Step S140 is separated by more than a predetermined distance set in advance. If the position of the rear half-cut line HC2 and the position of the cutting line CL are too close to each other, the determination is not satisfied, it is determined that provision of the rear half-cut line HC2 separately from the cutting line CL is not appropriate, and the routine is finished.

On the other hand, if the position of the rear half-cut line HC2 and the position of the cutting line CL are sufficiently far from each other, the determination is satisfied, and the routine goes to Step S520. The above Step S510 is a procedure to prevent such a state that the cutting line CL and the rear half-cut line HC2 are too close to each other and the label is peeled off at the full-cut by the cutting mechanism 15 or the separated tape adheres to the movable blade 41 or the like of the cutting mechanism 15, which might cause nonconformity in device operation.

At Step S520, similarly to Step S20, it is determined if the label tape 109 with print has been fed to the above-mentioned rear half-cut position (in other words, if the label tape 109 has reached a position where the half cutter 34 of the half cut mechanism 35 is opposed to the rear half-cut line HC2 calculated at Step S135). The determination at this time can be also made by detecting a feeding distance after the identifier PM of the base tape 101 is detected at Step S10 by a predetermined known method as in the above. This procedure is repeated till the rear half-cut position is reached and the determination is satisfied, and when being reached, the determination is satisfied and the routine goes to the subsequent Step S530.

At Step S530, similarly to the above-mentioned Step S50 and the like, a control signal is output to the feeding motor driving circuit 121 and the tape discharge motor driving circuit 123 through the input/output interface 113, the driving of the feeding motor 119 and the tape discharge motor 65 is stopped, and the rotation of the feeding roller 27, the ribbon take-up roller 106 and the driving roller 51 is stopped. By this operation, in the state where the half cutter 34 of the half cut mechanism 35 is opposed to the rear half-cut line HC2 calculated at Step S135, feeding-out of the base tape 101 from the first roll 102, feeding-out of the cover film 103 from the second roll 104, and feeding of the label tape 109 are stopped.

After that, the routine goes to Step S540, where a control signal is output to the half cutter motor driving circuit 128 as in Step S30 so as to rotate the half cutter 34, and the rear half-cut processing is executed that the cover film 103, the adhesive layer 101a, the magnetic film layer 101b, and the adhesive layer 101c of the label tape 109 with print are cut off and the rear half-cut line HC2 is formed (See Fig. 18J).

Then, the routine goes to Step S550, where the feeding roller 27, the ribbon take-up roller 106, the driving roller 51 are rotated and driven similarly to Step S35 so as to resume feeding of the label tape 109 with print, and this routine is finished.

In the label producing apparatus 1 of the present embodiment configured as above, the base tape 101 in the laminate structure including the adhesive layer 101a made of an appropriate adhesive, the magnetic film layer 101b, the adhesive layer 101c made of an appropriate adhesive, and the separation sheet 101d is fed by the feeding means, the base tape 101 is bonded to the cover film 103 via the adhesive layer 101a, and the label T in the laminate structure including the cover film 103, the adhesive layer 101a, the magnetic film layer 101b, the adhesive layer 101c, and the separation sheet 101d is produced. Then when the RFID circuit element To provided with the IC circuit part 150 and the antenna 151 is mounted to the produced label T to have the RFID label TL, a user can produce the RFID label TL by affixing the antenna sheet AS on which the RFID circuit element To is arranged to the cover film 103.

At this time, in correspondence with the affixing work, the substantially sheet-state magnetic film GF smaller than the tape width-direction dimension and intermittent in the tape longitudinal direction is provided on the base tape 101 with a predetermined equal interval, and the tag affixing print TR is printed by the print head 23 on the cover film 103 in correspondence with the position of the magnetic film GF at label production. By this operation, the user can easily and surely mount the RFID circuit element To at a position corresponding to the magnetic film GF by visually recognizing the tag affixing print TR printed on the cover filjm 103 when mounting (the antenna sheet AS having) the RFID circuit element To to the cover film 103. As a result, when the produced RFID label TL is to be affixed via the adhesive layer 101c by separating the separation sheet 101d of the produced RFID label TL, even if the label is affixed to a metal affixed surface (or an affixed surface with metal in the vicinity), the magnetic film GF can be interposed between the RFID circuit element To and the metal surface. Therefore, a communication failure caused by a magnetic path between the metal surface and the RFID circuit element To can be prevented, by which smoothness and reliability of communication can be ensured.

Particularly in this embodiment, the magnetic film layer 101b is comprised by the magnetic film GF and a base film 101ba for arranging the magnetic film GF in a predetermined form. By this arrangement, the magnetic film GF can be disposed on the magnetic film layer 101b in the predetermined form using the base film 101ba so that the RFID circuit element To is mounted at a position corresponding to the magnetic film GF.

Also, particularly in this embodiment, the base film 101ba is comprised with a thickness substantially equal to that of the magnetic film GF and provided so as to compensate for the deficient part in the tape width-direction dimension or the longitudinal direction dimension in the magnetic film layer 101b. With the arrangement, a layer with the same width-direction dimension as the tape width and an even thickness can be formed by bonding the magnetic film GF and the base film 101ba. As a result, undulation is not generated any more in the other layers, by which occurrence of wrinkles can be prevented.

Also, particularly in the present embodiment, the identifier PM indicating information relating to the position of the magnetic film GF is provided at the separation sheet 101d of the label tape 109. By this arrangement, the user can be visually notified of the position of the magnetic film GF to know the position to affix the antenna sheet AS when the antenna sheet AS is to be affixed after label production. Also, by providing a mark sensor 127 for detecting the identifier PM on the side of the label producing apparatus, the tag affixing print TR indicating the position of the magnetic film GF can be printed on the cover film 103 on the side (front side) opposite to the separation sheet 101d according to the detection result, and in this case, the position of the magnetic film GF can be visually notified further surely.

The present invention is not limited to the above embodiment, but various variations are possible in a range not departing from its gist and technical idea. The variations will be described below.

### (1) When the magnetic film is not disposed at the tape-width center part:

That is, this is a case where a base tape 101 on which the magnetic film GF is disposed with displacement on one side or the other side in the tape width direction is applied to the tape of the label producing apparatus 1 instead of the tape on which the magnetic film GF is disposed substantially at the center in the tape width direction of the base tape 101 as described in the above embodiment.

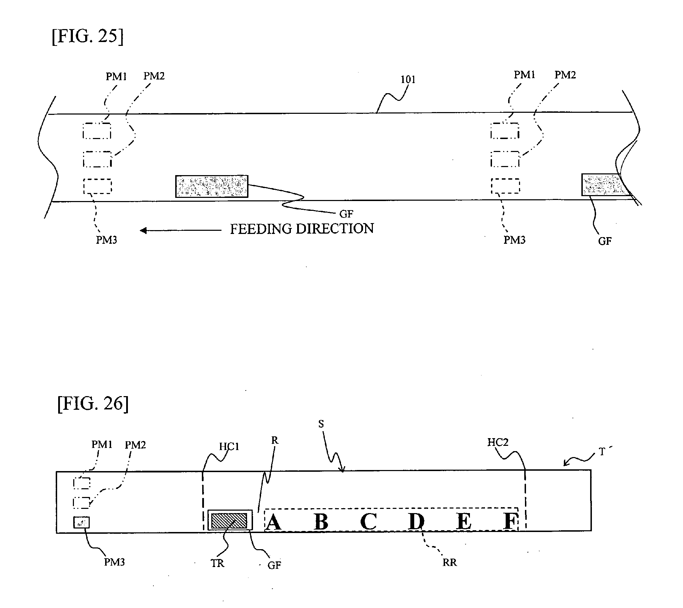

Fig. 25 indicates base tape 101 of this variation from the center arrow D direction of the above-mentioned Fig. 5. The Fig. 25 corresponds to the above-mentioned Fig. 6. The same reference numerals are given to equivalent parts in Fig. 6 and the like, and description will be omitted as appropriate. In Fig. 25, an identifier PM3 is provided at a position displaced to one side in the tape width direction (lower side in the figure) on the separation sheet 101d of the base tape 101, and the magnetic film GF is disposed with displacement to one side in the tape width direction corresponding to this identifier PM3. An identifier PM1 and an identifier PM2 in the case where the magnetic film GF is disposed on the other side or the center side in the tape width direction are shown by a two-dot chain line in the figure.

Fig. 26 indicates an example of a label T' completed by using the base tape 101 of this variation. The Fig. 26 corresponds to the above-mentioned Fig. 19. On the label T', the tag affixing print TR and the normal print RR are applied with displacement to one side in the tape width direction. This example shows a case where the normal print RR is printed with displacement to one side in the tape width direction, but not limited to that, the normal print RR may be printed at the center part in the tape width direction similarly to the above-mentioned embodiment.

Though not particularly shown, when the identifier PM (any of the PM1 to PM3 in this example) is provided at a predetermined position in the tape width direction as in this variation, the applicable identifier PM may be read by using the mark sensors provided at a plurality of positions in the tape width direction for surely reading the position of the identifier PM. By this arrangement, the position where the magnetic film GF is disposed can be surely detected.

### (2) When the substantially band-state magnetic film is used:

That is, this is a case where a base tape 101 having a magnetic film layer 101b on which a continuous band-state magnetic film GF is disposed is applied to a tape of the label producing apparatus 1 instead of the above base tape 101 on which substantially sheet-state magnetic films GF intermittent in the longitudinal direction of the base tape 101 are sequentially formed with a predetermined equal interval as mentioned in the above embodiment.

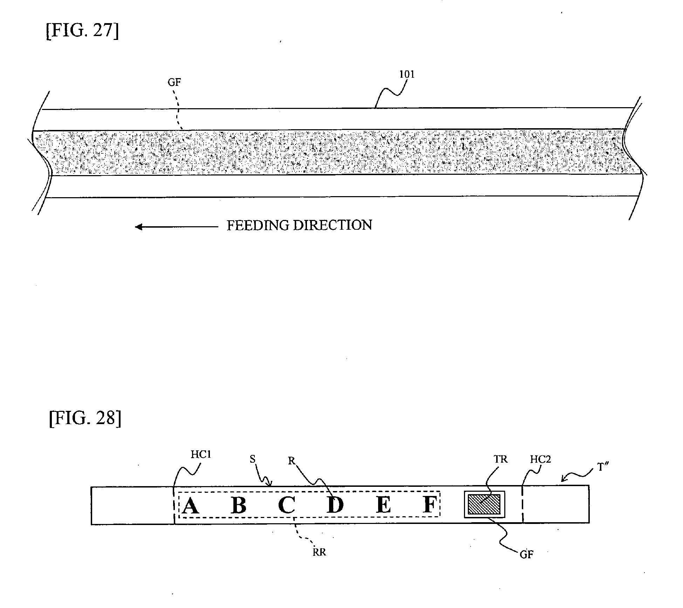

Fig. 27 indicates base tape 101 of this variation from the center arrow D direction in the above-mentioned Fig. 5. The Fig 27 also corresponds to the above-mentioned Fig. 6. The same reference numerals are given to equivalent parts in Fig. 6 and the like, and description will be omitted as appropriate. In Fig. 27, the magnetic film GF is in the same continuous band-state as the substantial tape length, and in this case, it is not necessary to obtain the position information of the magnetic film GF (print area information of the tag affixing print TR) from the cartridge information as in the above embodiment, and printing of the tag affixing print TR can be started at any position in the tape longitudinal direction.

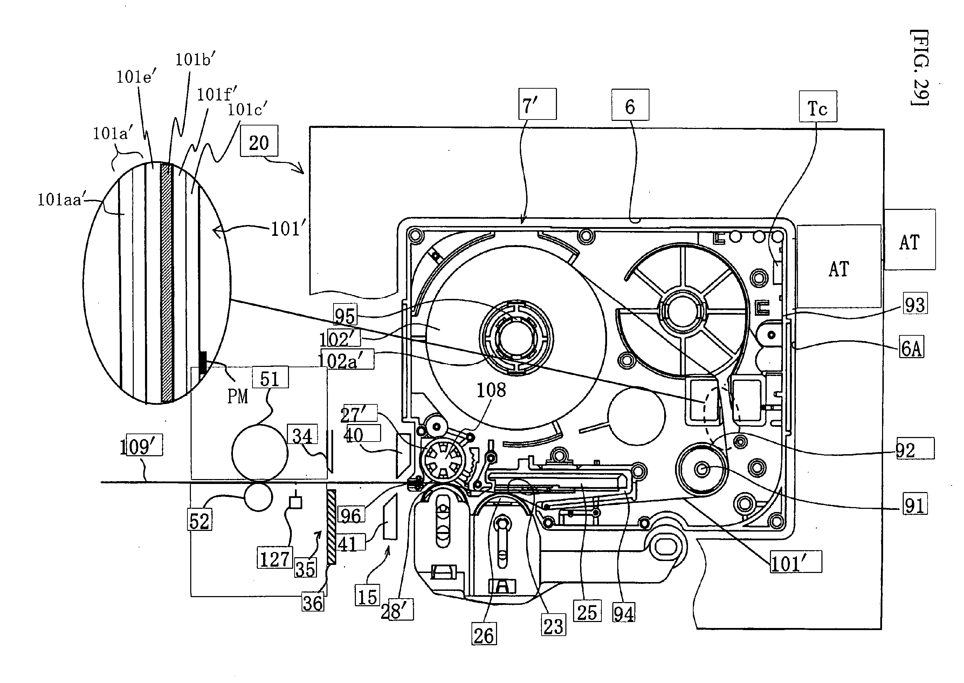

Fig. 28 indicates an example of a label T'' completed using the base tape 101 of this variation. The Fig. 28 corresponds to the above-mentioned Fig. 19. Here, on the contrary to the above embodiment, an example where the tag affixing print TR is arranged on the other side of the normal print RR in the tape longitudinal direction (right side in the figure) is illustrated.

### (3) When tape bonding is not carried out:

That is, this is a case applied to a cartridge for a thermal tape that print is made directly on a thermal tape layer provided on the tape instead of by applying a print on the cover film 103 separately from the base tape 101 and bonding them together.

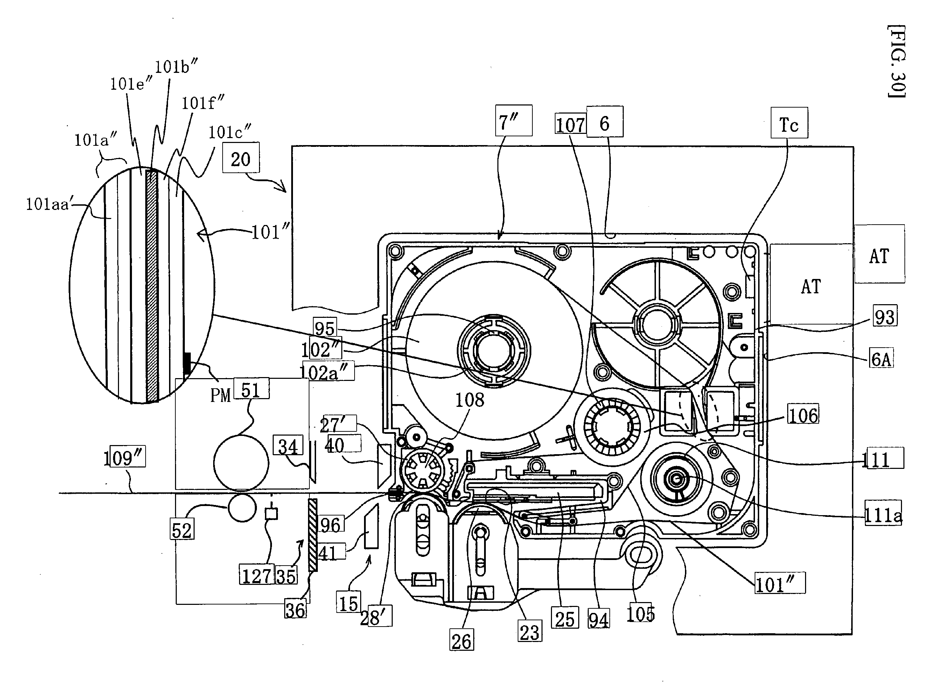

Fig. 29 indicates a detailed structure of a cartridge 7' of this variation. The Fig. 29 corresponds to the above-mentioned Fig. 4. The same reference numerals are given to the equivalent parts in Fig. 4 and the like and explanation will be omitted as appropriate.

In Fig. 29, the cartridge 7' has a first roll 102'' around which a thermal tape 101' is wound and a feeding roller 27' for feeding the thermal tape 101' in the direction outside the cartridge 7'.

The first roll 102' has the band-state transparent thermal tape 101' having a magnetic film layer 101b' (including base film 101ba', as the above-described magnetic film layer 101b) on which a plurality of substantially sheet-state magnetic films GF intermittent in the longitudinal direction of the thermal tape 101' (or may be the continuous substantially band-state magnetic film GF. The same applies to the following) is sequentially formed with a predetermined equal interval wound around a reel member 102a'. The reel member 102a' is rotatably fitted and inserted to the boss 95 provided upright on the bottom surface of the cartridge 7' and stored therein.

The thermal tape 101' wound around the first roll 102' is in the six-layered structure in this example (See a partially enlarged view in Fig. 29), comprised in lamination of a cover film 101a' made of polyethylene terephthalate (PET) and the like having a thermal recording layer 101aa' on the surface, an adhesive layer 101e' made of an appropriate adhesive, a magnetic film layer 101b' on which substantially sheet-state magnetic films GF intermittent with a width-direction dimension smaller than the width-direction dimension of the label tape 109' are sequentially formed with a predetermined equal interval, an adhesive layer 101f' made of an appropriate adhesive, and a separation sheet 101c' in the order from the side wound inside to the opposite side.

On the back side of the cover film 101a', the separation sheet 101c' is affixed to the cover film 101a' through the adhesive layer 101e' and the adhesive layer 101f'. On the surface of the separation sheet 101c', a predetermined identifier for feeding control (an identifier painted in black in this example. Alternatively, it may be a drilled hole penetrating the thermal tape 101' by laser machining or the like.) PM is provided at a predetermined position similarly to the separation sheet 101d.

When the cartridge 7' is attached to the cartridge holder 6 and the roller holder 25 is moved from the separated position to the contact position, the thermal tape 101' is held between the print head 23 and the platen roller 26 and between the feeding roller 27' and a sub roller 28'. Then the feeding roller 27', the sub roller 28' and the platen roller 26 are rotated in synchronization, and the thermal tape 101' is fed out of the first roll 102'.

The fed-out thermal tape 101' is supplied from an opening portion 94 to the print head 23 on the downstream side in the feeding direction while it is guided by a substantially cylindrical reel 92 rotatably fitted by insertion into a reel boss 91 installed upright on the cartridge bottom surface. The print head 23 has its plurality of heater elements electrified by the above-mentioned print-head driving circuit 120 (See Fig. 15), by which the label print R (including the tag affixing print TR printed in accordance with the detecting result of the mark sensor 127, as described above) is printed on the thermal recording layer 101aa' of the cover film 101a' of the thermal tape 101' and formed as a label tape 109' with print and then, fed out of the cartridge 7' from a carry-out exit 96.

The feeding by the driving roller 51, cutting by the cutting mechanism 15 and the like after feeding out of the cartridge 7'

are the same as in the above embodiment, and description will be omitted.

The half cut unit 35 is different from those corresponding to the so-called laminate type described in Fig. 10 and the like. That is, in the configuration described in Fig. 10 and the like, the cradle 36 is located on the side of the print head 23, while the half cutter 34 is on the side of the platen roller 26. This is the configuration for carrying out half-cut from the surface opposite to the separation sheet of the produced tape. However, when the thermal tape is used as in this variation (also when the ink ribbon is used in the type not using the laminate, which will be described later using Fig. 30), the separation sheet is located on the side opposite to that of the laminate type. Therefore, in order to apply the half-cut to a portion other than the separation sheet, arrangement of the cradle 36 and the half cutter 34 is made opposite. That is, the half cutter 34 is located on the side of the print head 23, while the cradle 36 on the side of the platen roller 26.

This variation can also obtain the same effect as that of the above embodiment. Also, in this variation, any of the above variations (1), (2) can be combined. In this case, the same effect as that of the above variations (1), (2) can be obtained.

In the configuration of the above variation, print is made only by heat generated by the print head 23 using the thermal tape as a tape, without particularly using an ink ribbon or the like, but not limited to this, a normal ink ribbon can be used for print as in the above embodiment.

Fig. 30 indicates the detailed structure of a cartridge 7" of such a variation. Fig 30 corresponds to Fig. 29 and the above-mentioned Fig. 4. The same reference numerals are given to the equivalent parts in Figs. 29, 4 and the like, and explanation will be omitted as appropriate.

In Fig. 30, the cartridge 7'' of this variation has a first roll 102'' around which a base tape 101" is wound.

The first roll 102'' has the band-state transparent base tape 101'' having the magnetic film layer 101b'' (including base film 101ba'', as the above-described magnetic film layer 101b) on which a plurality of substantially sheet-state magnetic films GF intermittent in the longitudinal direction of the base tape 101'' (or the continuous substantially band-state magnetic film GF. The same applies to the following) is sequentially formed with a predetermined equal interval wound around the reel member 102a''.

The base tape 101'' wound around the first roll 102'' is in the six-layered structure in this example (See a partially enlarged view in Fig. 30) and configured in lamination of a base film 101a'' made of a base such as polyethylene terephthalate (PET) and the like having a transfer tape layer 101aa'' comprised by a print-receiving material on the surface, an adhesive layer 101e" made of an appropriate adhesive, a magnetic film layer 101b" including substantially sheet-state magnetic films GF intermittent in the width-direction dimension smaller than the width-direction dimension of the label tape 109', an adhesive layer 101f'' made of an appropriate adhesive, and a separation sheet 101c'' in the order from the side wound inside to the opposite side.

On the back side of the cover film 101a'', the separation sheet 101c'' is affixed to the base film 101al ' through the adhesive layer 101e'' and the adhesive layer 101f''. On the surface of the separation sheet 101c", a predetermined identifier for feeding control (an identifier painted in black in this example. Alternatively, it may be a drilled hole penetrating the thermal tape 101'' by laser machining or the like.) PM is provided at a predetermined position similarly to above.

When the cartridge 7'' is attached to the cartridge holder 6 and the roller holder 25 is moved from the separated position to the contact position, the base tape 101'' and the ink ribbon 105 are held between the print head 23 and the platen roller 26 and between the feeding roller 27' and a sub roller 28'. Then the feeding roller 27', the sub roller 28' and the platen roller 26 are rotated in synchronization, and the base tape 101'' is fed out of the first roll 102''.

On the other hand, at this time, the plurality of heater elements of the print head 23 is electrified by the print-head driving circuit 120 (See Fig. 15), the label print R is printed on the surface of the transfer tape layer 101aa'' of the base film 101a'' of the base tape 101'' and formed as the label tape 109" with print and then, fed out of the cartridge 7''.

The feeding by the driving roller 51, cutting by the cutting mechanism 15 and the like after feeding out of the cartridge 7'' are the same as in the above embodiment, and description will be omitted. Also, the half cut unit 35 is the same as the variation in the above-mentioned Fig. 29.

This variation can also obtain the same effect as that of the above embodiment. Also, in this variation, any of the above variations (1), (2) can be combined. In this case, the same effect as that of the above variations (1), (2) can be obtained.

Though detailed description will be omitted, the base tape may be configured as a tape having an image receiving layer capable of print by an ink jet. This case also has substantially the same effect as that of the variation.

### (4) Others

In the above, a mark (identifier PM) is provided for detecting the magnetic film GF, and the mark sensor is used for detecting that, but not limited to that. That is, a magnetic sensor for detecting a magnetic material and a permanent magnet may be used for detecting the magnetic film GF. In this case, the same effect as that mentioned above can be also obtained. The detection of the magnetic film GF at this time may be made by providing the above sensor or the like inside the cartridge 7 or the like or by providing the above sensor or the like outside the cartridge 7 or the like (the same applies to the above-mentioned detecting method by the mark sensor).

Also, in the above, among the magnetic film layer 101b and the like including the magnetic film GF such as the label tape 109, the base film 101ba is provided so as to compensate for the deficient part in the width direction or the longitudinal direction with respect to the substantially tape shape of the label tape 109, but not limited to that. That is, it is only necessary to dispose the magnetic film GF as the magnetic film layer 101b and the like, without providing the base film 101ba and the like. Also in this case, the same effect as the above embodiment and variations can be obtained.

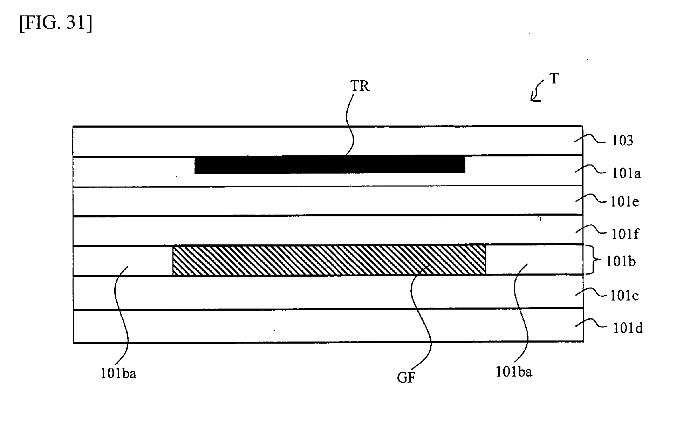

Also, in the above, the label T is made in the five-layered structure of the cover film 103, the adhesive layer 101a made of an appropriate adhesive, the magnetic film layer 101b on which the magnetic films GF are sequentially disposed with a predetermined equal interval, the adhesive layer 101c made of an appropriate adhesive, and the separation sheet 101d and configured so that the magnetic film GF can be seen from the label surface side, but not limited to this. That is, as shown in Fig. 31, a new base layer may be provided between the adhesive layer 101a and the magnetic film layer 101b so as to have a seven-layered structure in which that layer is added to the cover film 103, the adhesive layer 101a made of an appropriate adhesive, the base film 101e made of a base material such as polyethylene terephthalate (PET), the adhesive layer 101f made of an appropriate adhesive, the magnetic film layer 101b, the adhesive layer 101c, and the separation sheet 101d. In this case, the same effect as the above embodiment can be obtained. If a base material such as colored PET is used for the base film 101e in this case, the magnetic film GF portion protruding from the tag affixing print TR can be concealed (or made difficult to be seen).

Also, in the above, the pressure roller is provided, by which the label tape 109 and the cover film 103 as a print-receiving medium are driven, and relative movement with the fixedly installed print head 23 is given, but not limited to that. That is, on the contrary to that arrangement, the print head 23 may be driven by a predetermined moving mechanism so as to give relative movement to the print head and a print-receiving medium such as a sheet-state. Also in this case, by executing the same control in the relative positional relation similar to the above, the same effect as mentioned above can be obtained.

Also, in the above, the half cut unit 35 as half cutting means is provided separately from the cutting mechanism 15 as the cutting means, but not limited to that. That is, half cutting may be carried out by such control that a rotating angle of the fixed blade 41 of the cutting mechanism 15 becomes smaller than that in full cut, for example, so that the cutting means and the half cutting means are used as single means. This case also obtains the same effect. Alternatively, the half cutting means for forming the half cut line HC1 and the half cutting means for forming the half cut line HC2 may be provided as separate means.

Also, configuration may be such that the cartridge 7 is not used but the first roll 102 is directly and detachably attached to the side of the label producing apparatus 1, and moreover, not limited to the device such as the cartridge 7 detachably attached to the side of the label producing apparatus 1, the first roll 102 may be provided non-detachably to the side of the apparatus main body as a so-called installed type or an integral type. This case also obtains the same effect.

Other than those mentioned above, methods of the embodiments and each variation may be combined as appropriate for use.

Though not specifically exemplified, the present invention should be put into practice with various changes made in a range not departing from its gist.

## Claims

1. A label tape roll (102; 102'; 102'') configured by winding a label tape (101; 101'; 101'') in a substantially tape state provided with a predetermined width-direction dimension around a shaft substantially crossing a tape longitudinal direction, wherein:
said label tape (101; 101'; 101'') includes:
a magnetic layer (GF) in a substantially band-state continuous in the tape longitudinal direction or in a substantially sheet-state intermittent in the tape longitudinal direction and having a width-direction dimension smaller than the width-direction dimension of said label tape (101; 101'; 101'');
an affixing adhesive layer (101c; 101f'; 101f'') provided on one side of said magnetic layer (GF) in said tape thickness direction to affix said magnetic layer (GF) to an affixing target; and
a separation material layer (101d; 101c'; 101c'') that covers the one side of said affixing adhesive layer (101c; 101f'; 101f") in said tape thickness direction and is separated at affixing.

2. The label tape roll (102; 102'; 102'') according to claim 1, wherein:
said label tape (101; 101'; 101'') further includes an arrangement base layer (101ba; 101ba'; 101ba'') for disposing said magnetic layer (GF) in a predetermined form.

3. The label tape roll (102; 102'; 102'') according to claim 2, wherein:
said arrangement base layer (101ba; 101ba'; 101ba'') of said label tape (101; 101'; 101'') is provided so as to compensate for a deficient part in the width-direction dimension or the longitudinal-direction dimension of said magnetic layer (GF) for said substantially tape-state shape of said label tape (101; 101'; 101'').

4. The label tape roll (102) according to one of claims 1 to 3, wherein:
said label tape (101) has a bonding adhesive layer (101a) provided on the other side of said magnetic layer (GF) in said tape thickness direction to bond said magnetic layer (GF) to a print-receiving tape layer (103) provided with a print area (S) on which a predetermined print is applied.

5. The label tape roll (102) according to claim 4, wherein:
said label tape (101) has:
a first intermediate base layer (101e) provided on the other side of said magnetic layer (GF) in said tape thickness direction; and
a first mounting adhesive layer (101f) provided between said first intermediate base layer (101e) and said magnetic layer (GF) to mount said magnetic layer (GF) to said first intermediate base layer (101e), and
said bonding adhesive layer (101a) is provided between said first intermediate base layer (101e) and said print-receiving tape layer (103).

6. The label tape roll (102'; 102'') according to one of claims 1 to 5, wherein:
said label tape (101'; 101'') further includes:
a second intermediate base layer (101a'; 101a'') provided on the other side of said magnetic layer (GF) in said tape thickness direction;
a print-receiving layer (101aa'; 101aa'') provided at the other side of said second intermediate base layer (101a'; 101a'') in said tape thickness direction and constructed by a print-receiving material capable of forming a print; and
a second mounting adhesive layer (101e'; 101e") provided between said magnetic layer (GF) and said second intermediate base layer (101a'; 101a'') to mount said magnetic layer (GF) to said second intermediate base layer (101a'; 101a'').

7. The label tape roll (102) according to any one of claims 1 to 6, wherein:
an identifier (PM; PM1, PM2, PM3) indicating information relating to a position of said magnetic layer (GF) is provided at said separation material layer (101d) of said label tape (101).

8. An RFID label (TL) formed by use of a tape (109) including said label tape (101) fed out from said label tape roll (102) according to claim 4, said tape (109) further including said print-receiving tape layer (103) bonded to said bonding adhesive layer (101a) of said label tape (101), wherein:
an antenna base (AS) is affixed to an area corresponding to said magnetic layer (GF) in said print-receiving tape layer (103), said antenna base (AS) being provided with an RFID circuit element (To) having an IC circuit part (150) that stores information and an antenna (151) that transmits/receives information.

9. An RFID label (TL) formed by use of said label tape (101' ; 101'') fed out from said label tape roll (102'; 102'') according to claim 6, wherein:
an antenna base (AS) is affixed to an area corresponding to said magnetic layer (GF) in said print-receiving layer (101aa'; 101aa''), said antenna base (AS) being provided with an RFID circuit element (To) having an IC circuit part (150) that stores information and an antenna (151) that transmits/receives information.

10. The RFID label (TL) according to claim 8 or 9, wherein:
an identifier (PM; PM1, PM2, PM3) indicating information relating to a position of said magnetic layer (GF) is provided at said separation material layer (101d).

11. A label production cartridge (7) comprising said label tape roll (102) according to claim 4, wherein:
said label production cartridge (7) is constructed capable of detachably attached to a label producing apparatus (1).

12. A label production cartridge (7'; 7'') comprising said label tape roll (102'; 102'') according to claim 6, wherein:
said label production cartridge (7'; 7") is constructed capable of detachably attached to a label producing apparatus.

13. A label producing apparatus (1) that produces a print label (TL) by using said label tape (101) fed out from said label tape roll (102) according to claim 4, wherein:
said label producing apparatus (1) comprising:
feeding means (108, 28, 26; 108, 28', 26) that feeds said label tape (101); and
printing means (23) that prints a first print identifier (TR) on said print-receiving tape layer (103) according to the position of said magnetic layer (GF), said first print identifier (TR) indicating an arrangement position of an antenna base (AS), said antenna base (AS) being provided with an RFID circuit element (To) having an IC circuit part (150) that stores information and an antenna (151) that transmits/receives information.

14. A label producing apparatus that produces a print label (TL) by using said label tape (101'; 101'') fed out from said label tape roll (102'; 102'') according to claim 6, wherein:
said label producing apparatus comprising:
feeding means (108, 28, 26; 108, 28', 26) that feeds said label tape (101'; 101''); and
printing means (23) that prints a second print identifier (TR) on said print-receiving layer (101aa'; 101aa'') according to the position of said magnetic layer (GF), said second print identifier (TR) indicating an arrangement position of an antenna base (AS), said antenna base (AS) being provided with an RFID circuit element (To) having an IC circuit part (150) that stores information and an antenna (151) that transmits/receives information.

15. The label producing apparatus (1) according to claim 13 or 14, wherein:
said label producing apparatus (1) further comprises detecting means (127) that detects information relating to a position of said magnetic layer (GF) in said label tape (101; 101'; 101''), and
said printing means (23) prints said first or second print identifier (TR) on said print-receiving tape layer (103) or said print receiving layer (101aa'; 101aa'') according to a detection result of said detecting means (127).
